(19) Europäisches Patentamt
European Patent Office
Office européen des brevets

(11) **EP 4 636 755 A1**

(12) **EUROPEAN PATENT APPLICATION**
published in accordance with Art. 153(4) EPC

(43) Date of publication:
**22.10.2025 Bulletin 2025/43**

(21) Application number: **23903504.1**

(22) Date of filing: **12.12.2023**

(51) International Patent Classification (IPC):
*G10K 11/168* (2006.01)    *B32B 5/24* (2006.01)
*B32B 5/26* (2006.01)    *G10K 11/16* (2006.01)

(52) Cooperative Patent Classification (CPC):
**B32B 5/24; B32B 5/26; G10K 11/16; G10K 11/168**

(86) International application number:
**PCT/JP2023/044403**

(87) International publication number:
**WO 2024/128220 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 JP 2022198800
07.04.2023 JP 2023063021**

(71) Applicant: **Asahi Kasei Kabushiki Kaisha
Tokyo 1000006 (JP)**

(72) Inventors:
• **TANIGUCHI, Hotaka
Tokyo 100-0006 (JP)**
• **ASAI, Hirotaka
Tokyo 100-0006 (JP)**
• **YAMASAKI, Naoaki
Tokyo 100-0006 (JP)**

(74) Representative: **Dompatent
Partnerschaft von Patent- und Rechtsanwälten
mbB
Deichmannhaus am Dom
Bahnhofsvorplatz 1
50667 Köln (DE)**

(54) **SOUNDPROOF MATERIAL**

(57) Provided is a soundproof material having excellent sound insulating properties in a wide frequency range of 200 to 2000 Hz while exhibiting sound absorption performance. The present invention relates to a soundproof material formed by the lamination of at least two layers, i.e., a nonwoven fabric A which is composed of fibers, and a porous body B which is a molded body having a porous structure. The soundproof material is characterized in that the nonwoven fabric A contains at least 1 mass% of fibrillated fibers.

EP 4 636 755 A1

## Description

FIELD

The present invention relates to a soundproof material.

BACKGROUND

When an automobile travels it generates various forms of noise including noise from the engine or drive system, road noise, and wind noise. Sound-absorbing materials have conventionally been used for the purpose of inhibiting noise emission in order to suppress such unwanted noise and create a more comfortable indoor automobile space. In recent years, with advances in electric vehicles and increasingly quiet drive systems, sounds that had not previously been considered to be noise have come to be recognized as noise. Since the frequency of noise depends on its sound source, sound-absorbing materials suitable for different sound sources are used. However, porous sound-absorbing materials that are commonly used in vehicles, such as nonwoven fabrics and foam, while exhibiting an excellent sound absorption coefficient in the high frequency range, tend to have a lower sound absorption coefficient at the low frequency end. It is also known that providing additional layers on the surface of a porous material improves the soundproof quality in all frequency ranges.

For example, PTL 1 describes a textile-type composite sound absorbing material having a foam layer provided as an air permeability-modifying layer on a nonwoven fabric obtained by combining fibers of specific fineness, the material exhibiting an excellent sound absorption property at 800 Hz to 2000 Hz.

PTL 2 discloses a composite sound absorbing material having a spunbond nonwoven fabric spot-bonded on a melamine foamed body using a hot-melt adhesive, and teaches that an excellent sound absorption property is exhibited in all frequency ranges if the thickness is slightly greater than 10 mm.

[CITATION LIST]

[PATENT LITERATURE]

[PTL 1] Japanese Unexamined Patent Publication No. 2018-154113
[PTL 2] International Patent Publication No. WO2017/006993

SUMMARY

[TECHNICAL PROBLEM]

The conventional techniques improve sound absorption properties by providing further layers in porous materials, but they have produced almost no effects in terms of sound-insulating properties. As an effective measure against noise leaking from the interior to the exterior of a vehicle, such as the driving sound of the engine, it is preferable to increase the sound-insulating properties rather than the sound absorption properties of the soundproof material. In light of this situation, the problem to be solved by the invention is to provide a soundproof material that, by modification of the composition of a layer formed on a porous material, exhibits sound absorption performance while exhibiting excellent sound-insulating properties in a wide frequency range of 200 Hz to 2000 Hz.

[SOLUTION TO PROBLEM]

As a result of much diligent experimentation directed toward solving the problems described above, the present inventors have completed this invention upon finding, unexpectedly, that by varying the composition of a layer formed on a porous material, it is possible to provide a soundproof material with excellent sound-insulating properties in a wide range of frequencies from 200 Hz to 2000 Hz, while exhibiting sound absorption performance.

Specifically, the present invention provides the following.

[1] A soundproof material comprising at least two laminated layers: a nonwoven fabric A as a nonwoven fabric composed of fibers and a porous body B as a molded article with a porous structure, wherein the nonwoven fabric A contains fibrillated fibers at 1 wt.% or greater.
[2] The soundproof material according to aspect [1] above, comprising at least three layers: the nonwoven fabric A as a nonwoven fabric composed of fibers, the porous body B as a molded article with a porous structure, and a sound-insulating material, which are layered in the order: nonwoven fabric A, porous body B, sound-insulating material.

[3] The soundproof material according to aspect [2] above, wherein the sound-insulating material is the nonwoven fabric A.

[4] The soundproof material according to any one of aspects [1] to [3] above, wherein the nonwoven fabric A has a unit thickness flow resistance of from 1,400,000 Ns/m$^4$ to 5,000,000,000 Ns/m$^4$.

[5] The soundproof material according to any one of aspects [1] to [4] above, wherein the nonwoven fabric A has a porosity of from 60% to 96%.

[6] The soundproof material according to any one of aspects [1] to [5] above, wherein the nonwoven fabric A has a tortuosity of from 1.20 to 10.0.

[7] The soundproof material according to any one of aspects [1] to [6] above, wherein the nonwoven fabric A further comprises fibers that are not fibrillated.

[8] The soundproof material according to any one of aspects [1] to [7] above, wherein the porous body B has a surface density of 10,000 g/m$^2$ or lower and a thickness of from 1 mm to 100 mm.

[9] The soundproof material according to any one of aspects [1] to [8] above, wherein the fibrillated fibers are one or more selected from the group consisting of microfibrillated cellulose, acrylic pulp, aramid pulp, chitin nanofibers, chitosan nanofibers and silk nanofibers.

[10] The soundproof material according to any one of aspects [1] to [9] above, wherein the fibrillated fibers have a fibrillation index of 0.3% or greater.

[11] The soundproof material according to any one of aspects [1] to [10] above, wherein the fibrillated fibers comprise 3 wt.% to 30 wt.%, based on the total weight of the nonwoven fabric.

[ADVANTAGEOUS EFFECTS OF INVENTION]

According to the invention it is possible to provide a soundproof material that exhibits sound absorption performance while exhibiting excellent sound-insulating properties over a range of 200 Hz to 2000 Hz.

DESCRIPTION OF EMBODIMENTS

Embodiments of the invention will now be explained in detail, with the understanding that the invention is not limited to the embodiments.

<Nonwoven fabric>

A nonwoven fabric is a structure that has been formed with a plurality of fibers chemically or physically entangled or bonded together.

<Nonwoven fabric A>

The soundproof material of the embodiment includes a nonwoven fabric, wherein the fibers composing the nonwoven fabric comprise fibrillated fibers as described below. The nonwoven fabric will hereunder be referred to as "nonwoven fabric A".

(Nonwoven fabric A thickness)

The thickness of nonwoven fabric A of the embodiment is preferably 0.05 mm or greater. It is known that increased material thickness generally increases rigidity as well. In particular, it is known that increasing rigidity of a soundproof material results in a high sound-insulating property in the low frequency range (this is known as the "rigidity rule"). If the thickness is within this range, the nonwoven fabric will have a self-supporting property, and consequently a high sound-insulating property. The thickness of nonwoven fabric A is more preferably 0.1 mm or greater, even more preferably 0.5 mm or greater and most preferably 0.8 mm or greater. Since a larger thickness increases the rigidity, the upper limit is not particularly restricted but is preferably 100 mm or smaller from the viewpoint of handleability and post-processing such as pressing. It is more preferably 50 mm or smaller, even more preferably 10 mm or smaller and most preferably 5 mm or smaller. By layering two or more nonwoven fabrics A, the thickness of the nonwoven fabric A as a whole can be increased.

(Unit thickness flow resistance of nonwoven fabric A)

The nonwoven fabric A has a unit thickness flow resistance of preferably 1,400,000 Ns/m$^4$ or greater. The "unit thickness flow resistance" referred to here is the resistance to flow of air in a material with a thickness of 1 m when air flows through the material. A higher unit thickness flow resistance corresponds to inhibited permeation of air, and an improved sound-insulating property of the material. The unit thickness flow resistance is preferably 4,300,000 Ns/m$^4$ or greater, more preferably 9,500,000 Ns/m$^4$ or greater, even more preferably 15,000,000 Ns/m$^4$ or greater, yet more preferably 42,000,000 Ns/m$^4$ or greater and most preferably 52,000,000 Ns/m$^4$ or greater. On the other hand, a high unit thickness flow resistance lowers the sound absorption coefficient of a material. When air passes through a nonwoven fabric, sound absorption in the nonwoven fabric occurs by a mechanism in which vibration is converted to thermal energy by friction between the air and fibers, thus reducing vibration. If the unit thickness flow resistance is too high, it becomes difficult for air to pass through the nonwoven fabric, and the sound absorption coefficient is lowered as a result. It is therefore preferably 5,500,000,000 Ns/m$^4$ or lower, more preferably 4,500,000,000 Ns/m$^4$ or lower, even more preferably 3,200,000,000 Ns/m$^4$ or lower and most preferably 1,500,000,000 Ns/m$^4$ or lower.

(Porosity of nonwoven fabric A)

The nonwoven fabric A has a porosity of preferably 96% or lower. A lower porosity reduces voids in the nonwoven fabric. Sound is associated with movement of air particles, and smaller voids in the gaps results in a more rapid particle velocity. A high particle velocity also results in efficient thermal energy conversion by friction between the air and the fibers in the nonwoven fabric, thus increasing the sound absorption coefficient. The porosity of nonwoven fabric A is more preferably 90% or lower, even more preferably 86% or lower, yet more preferably 84% or lower and most preferably 83% or lower. If the porosity is too low, the unit thickness flow resistance will be higher and the sound absorption coefficient of the material will be reduced, and therefore the lower limit is preferably 60% or higher, more preferably 70% or higher, even more preferably 73% or higher, yet more preferably 77% or higher and especially preferably 78% or higher.

(Tortuosity of nonwoven fabric A)

The nonwoven fabric A has a tortuosity of preferably 1.20 or higher. The tortuosity referred to here is a parameter that expresses the ratio of the length of the pathway of a fluid flowing inside a nonwoven fabric with respect to the thickness of the nonwoven fabric. A higher tortuosity improves the sound absorption property of the material. As mentioned above, sound absorption in a nonwoven fabric occurs by thermal energy conversion by friction between the fibers and air vibration. High tortuosity increases the frequency of friction between the fibers and air, and as a result the sound absorption coefficient of the material is also increased. The tortuosity of nonwoven fabric A is more preferably 1.47 or higher, even more preferably 2.04 or higher, yet more preferably 2.33 or higher, especially preferably 3.00 or higher and most preferably 5.00 or higher. If the tortuosity is too low the unit thickness flow resistance will be higher, resulting in a lower sound absorption coefficient of the material, and it is therefore preferably 12.0 or lower, more preferably 11.5 or lower and even more preferably 10.0 or lower.

(Constituent fibers of nonwoven fabric A)

Nonwoven fabric A includes fibrillated fibers. Nonwoven fabric A also preferably includes fibers that are not fibrillated, in addition to the fibrillated fibers. Fibrillated fibers in nonwoven fabric A will be referred to as fibrillated fibers, and fibers that are not fibrillated will be referred to as non-fibrillated fibers.

(Fibrillated fibers)

The term "fibrillated fibers" refers to fibers torn in the axial direction and fragmented to produce fluff. Fibrillated fibers are largely classified into two types: fibers without a branched structure that have been partially fractured by physical or chemical means, and fibers that have been fibrillated by intentionally creating fluff during spinning of the polymer compound. Examples of the former include microfibrillated cellulose (cellulose fibers that have been micronized using at least one type of physical or chemical means, and synonymous with the common names CNF, CeNF, cellulose nanofibers, MFC, cellulose fine fibers and cellulose microfilaments), synthetic pulp such as acryl pulp (polyacrylonitrile fibrillated fibers) and aramid pulp, as well as chitin nanofibers, chitosan nanofibers and silk nanofibers. An example of the latter is synthetic pulp produced by flash-spinning. Fibrillated fibers generally have a structure with partially narrowed fiber diameters compared to ordinary fibers without a branched structure, due to the method for their production. Fibrillated fibers consequently have larger surface area while also tending to have more of a curved structure. Due to these features, the fibrillated fibers in nonwoven fabric A exhibit an effect as a binder for joining together non-fibrillated fibers by physical entanglement. The properties of nonwoven fabric A may be affected by differences in the fibrillation index, fiber diameters and surface conditions, which depend on the type of fibrillated fibers, but preferably the fibrillated fibers are entangled together and the unit thickness flow resistance and tortuosity are increased. From this viewpoint, the fibrillated fibers used are preferably at least one type selected from the group consisting of microfibrillated cellulose, acrylic pulp, aramid pulp, chitin nanofibers, chitosan nanofibers and silk nanofibers.

(Fibrillation index of fibrillated fibers)

The fibrillated fibers in nonwoven fabric A have a fibrillation index of preferably 0.3% or higher. The fibrillation index referred to here is the ratio of the total value of the lengths of the branched fibers with respect to the lengths of the stems of the fibrillated fibers. Within this range the effect as a binder will be sufficient, and nonwoven fabric A will have a self-supporting property, with low shedding of the non-fibrillated fibers from nonwoven fabric A. Fibers narrowed by fibrillation also exhibit an effect of sound absorption in the low frequency range. The fibrillation index of the fibrillated fibers is more preferably 0.5% or higher, even more preferably 0.9% or higher, yet more preferably 1.1% or higher, especially preferably 1.7% or higher and most preferably 2.2% or higher. The upper limit for the fibrillation index is not particularly restricted but may be 100% or lower, 10% or lower or 3% or lower.

The fibrillation index, mean fiber diameter (Method A), average fiber length and fine content in area for the purpose of the invention can be measured in the slurry state before obtaining the nonwoven fabric (for example, the fibrillated fibers may be measured alone after being obtained), as described in the Examples. After the fibrillated fibers and non-fibrillated fibers have been mixed in a predetermined proportion, the fibrillated fibers may be separated off from the mixed slurry state by a method such as sifting or centrifugal separation. The fibrillated fibers and non-fibrillated fibers may also be mixed, prepared into paper and dried to form a nonwoven fabric, and then the nonwoven fabric may be dispersed in water and the fibers disintegrated to separate off the fibrillated fibers by a method such as sifting or centrifugal separation, and then measured.

The methods for measuring the fibrillation index, average fiber length, mean fiber diameter (Method A) and fine content in area are described below, after separating out the fibrillated fibers from the mixed and papered dry nonwoven fabric, for example.

(1) After introducing 5 g of nonwoven fabric (dry product) and 300 g of purified water into a juicer mixer (Vitamix 1200i S), the mixture is stirred for 3 minutes under conditions with rotation level 1. The obtained dispersed water is poured into a stainless steel sieve (wire mesh diameter: $\varphi150\,\mu m$, mesh opening: $300\,\mu m$, weave: plain weave, inner height: 45 mm), and the filtered dispersed water is recovered with a pan to obtain dispersed water with only the fibrillated fibers extracted.

(2) The dispersed water obtained in (1) above is prepared to a 1 L aqueous dispersion with a final solid concentration of 0.004 wt.%, and a fiber image analyzer (Morfi-Neo by TechPap) is used for measurement under conditions with a photograph time of 3 minutes. The minimum fiber length measured is $20\,\mu m$. The minimum number of fibers that must be measured with a fiber image analyzer by this method is at least 500. The upper limit is not particularly restricted and may be up to 1,000.

(Average fiber length of fibrillated fibers)

The average fiber length of the fibrillated fibers in nonwoven fabric A is preferably $20\,\mu m$ or greater. Within this range, the fibers will exhibit a sufficient effect as a binder. A longer average fiber length of the fibrillated fibers will facilitate crosslinking of the fibrillated fibers between the non-fibrillated fibers. Since crosslinking of the fibrillated fibers increases the rigidity of the nonwoven fabric as a binder, a greater number of crosslinked fibrillated fibers results in higher rigidity of the nonwoven fabric and a higher sound-insulating property in the low frequency range. A larger number of crosslinked fibrillated fibers also increases the unit thickness flow resistance and tortuosity of the nonwoven fabric, and improves the sound-insulating property of the nonwoven fabric. The non-crosslinked fibrillated fibers are present in a manner fitting around the outer periphery of the non-fibrillated fibers. The degree to which the non-crosslinked fibrillated fibers contribute to improved sound-insulating properties of the nonwoven fabric is less than that of the crosslinked fibrillated fibers. The average fiber length of the fibrillated fibers is more preferably $25\,\mu m$ or greater and even more preferably $40\,\mu m$ or greater. The upper limit for the average fiber length is preferably $200\,\mu m$ or smaller in order to obtain a homogeneous molded article with excellent miscibility with the non-fibrillated fibers. A longer average fiber length results in a larger mean fiber diameter during the fibrillated fiber production steps, but a larger mean fiber diameter weakens entanglement between the fibrillated fibers and also reduces the effect as a binder. The upper limit for the average fiber length of the fibrillated fibers is more preferably $150\,\mu m$ or smaller, even more preferably $100\,\mu m$ or smaller, yet more preferably $90\,\mu m$ or smaller, especially preferably $60\,\mu m$ or smaller and most preferably $55\,\mu m$ or smaller.

(Fine content in area of fibrillated fibers)

The fine content in area of the fibrillated fibers in the nonwoven fabric is preferably 2.0% or greater. Fine fibers are fibers with fiber lengths of shorter than 100 $\mu$m, and the fine content in area is the proportion of the total summed area of fine fibers with fiber lengths of shorter than 100 $\mu$m in an observation image among the total summed area of all the fibers in the observation image (normal fiber area + fine fiber area). As mentioned above, a longer average fiber length results in a larger mean fiber diameter during the fibrillated fiber production steps, but a larger mean fiber diameter weakens entanglement between the fibrillated fibers and also reduces the effect as a binder. With a fine content in area within this range, the effect as a binder will be sufficient, and the nonwoven fabric will have a self-supporting property, with low shedding of the non-fibrillated fibers from the nonwoven fabric. The fine content in area is more preferably 3.0% or greater, even more preferably 8.0% or greater, yet more preferably 27.0% or greater and most preferably 30.0% or greater. If normal fibers with fiber lengths of 100 $\mu$m or greater are present then the fine fibers will become entangled with the normal fibers as the main axis, and therefore a certain amount of normal fibers are preferably included. The upper limit for the fine content in area is therefore preferably 90.0% or lower, more preferably 50.0% or lower and even more preferably 40.0% or lower.

<Mean fiber diameter of fibrillated fibers by Method A>

The mean fiber diameter of the fibrillated fibers in nonwoven fabric A is primarily either the mean fiber diameter corresponding to the trunk fiber portions of the fibrillated fibers (mean fiber diameter by Method A), or the mean fiber diameter including the microfibrous portions up to the fibrillated ends (mean fiber diameter by Method B). The mean fiber diameter by Method A is preferably 50 $\mu$m or smaller. Within this range, the sizes of pores formed in the composite molded body will not be too small, and suitable air permeability will be obtained. The mean fiber diameter of the fibrillated fibers by Method A is more preferably 20 $\mu$m or smaller, even more preferably 15 $\mu$m or smaller and most preferably 13 $\mu$m or smaller. The lower limit may be 1.5 $\mu$m or larger in terms of the resolving power of the apparatus. From the viewpoint of drainage in the wet-laid and pulp molding methods described below in the method for producing nonwoven fabric A, the lower limit is preferably 2.5 $\mu$m or larger, more preferably 5 $\mu$m or larger and even more preferably 10 $\mu$m or larger.

(Mean fiber diameter of fibrillated fibers by Method B)

The mean fiber diameter of the fibrillated fibers in the nonwoven fabric A by Method B is the mean fiber diameter including the microfibrous portions up to the fibrillated ends. The mean fiber diameter is preferably 1000 nm or smaller. Within this range, entanglement with the non-fibrillated fibers will be more likely to occur, thereby helping to inhibit shedding of the fibers from nonwoven fabric A. The mean fiber diameter of the entire fibrillated fibers by Method B is more preferably 800 nm or smaller, even more preferably 500 nm or smaller, yet more preferably 400 nm or smaller and especially preferably 300 nm or smaller. The lower limit is not particularly restricted but is preferably 10 nm or larger, more preferably 20 nm or larger, yet more preferably 30 nm or larger and most preferably 40 nm or larger.

(Cellulose starting material)

The fibrillated fibers used in nonwoven fabric A are preferably microfibrillated cellulose. The starting material for the microfibrillated cellulose may be a type I cellulose starting material, which includes wood pulp such as conifer pulp or hardwood pulp, and nonwood pulp. Examples of conifer pulp starting materials include fir, hemlock, Himalayan cedar, larch, ezo spruce, red pine, red ezo spruce, black pine, white pine, loblolly pine, spruce, cypress, sawara cypress, cedar, metasequoia, Japanese yew, umbrella pine, Hollywood juniper, goldcrest and blue ice. Examples of starting materials for hardwood pulp include eucalyptus, poplar, Japanese oak, oak, birch, beech, maple, chestnut, paulownia, white birch, elm and aspen. Nonwood pulp may be cotton pulp such as cotton linter pulp, or hemp pulp, bagasse pulp, kenaf pulp, bamboo pulp or straw pulp. Cotton pulp, hemp pulp, bagasse pulp, kenaf pulp, bamboo pulp and straw pulp are the refined pulp obtained from the respective starting materials of cotton lint, cotton linter, hemp abaca (usually from Ecuador or the Philippines), sisal, bagasse, kenaf, bamboo and straw, by refining steps such as delignification by digestion treatment and hemicellulose removal, and bleaching steps. Purified products of cellulose from bacteria such as acetic acid bacteria, seaweed cellulose or sea squirt cellulose may also be used as starting materials for cellulose fine fibers. Type II cellulose starting materials include cut yarns of regenerated cellulose fiber (such as rayon, lyocell and Bemberg), and cut yarns of cellulose derivative fibers, as well as pulp, for use as cellulose fine fiber starting materials, and cut yarns of regenerated cellulose or cellulose derivative superfine fibers obtained by electrospinning methods, for use as cellulose fine fiber starting materials or for cellulose fine fibers themselves. Such starting materials may be used alone or in mixtures of two or more different types. The mean fiber diameter can be adjusted by using multiple different starting materials in admixture.

(Crystalline form and degree of crystallinity)

As mentioned above, the crystalline forms of the cellulose are not uniform but are different crystalline forms, and they are largely classified as type I and type II cellulose. Of these, type I crystals exhibit high values for rigidity and thermal properties. In particular, it is known that increasing the rigidity of a soundproof material results in a high sound-insulating property in the low frequency range. Type I crystals are therefore preferably included in the crystalline form of the cellulose of the fibrillated fibers used in nonwoven fabric A. In more accurate academic terms, type I cellulose crystals include the two types $I\alpha$ and $I\beta$, but the blending ratio of the $I\alpha$ and $I\beta$ types need not be considered here. A larger component proportion of crystals (degree of crystallinity) of the cellulose will also increase the rigidity of the microfibrillated cellulose. The degree of crystallinity is preferably 60% or higher and 100% or lower. The degree of crystallinity is more preferably 70% or higher, even more preferably 80% or higher, yet more preferably 85% or higher and most preferably 90% or higher. The degree of crystallinity is determined by X-ray diffraction, with the diffraction lines due to crystallinity forming peaks, and the scattered light due to amorphous form being detected as a halo. The peak and halo are fitted, and the degree of crystallinity is calculated by applying the following formula:

$$\text{Degree of crystallinity } [\%] = 100 \times \text{Ic}/(\text{Ic} + \text{Ia});$$

{where Ic: peak integrated scattering intensity, Ia: halo integrated scattering intensity}.

(Method for producing microfibrillated cellulose)

The starting material may be micronized to obtain microfibrillated cellulose. As used herein, "micronization" means controlling the fiber length, fiber diameter and fibrillation index while sizing down the cellulose. According to one aspect, the micronization treatment may be preceded by a pretreatment step. As a pretreatment step, it is effective for the starting pulp to be subjected to autoclave treatment or enzyme treatment, or a combination thereof, while impregnated with water at a temperature of 100°C to 150°C, for conversion to a state that is easily micronized. Such pretreatment has the effect of not only reducing the load in the micronization treatment, but also of causing impurity components such as lignin and hemicellulose, which are present on the surface and in the gaps of the microfibrils forming the cellulose fibers, to be discharged into the aqueous phase, increasing the $\alpha$-cellulose purity of the micronized fibers as a result, and it is therefore effective for increasing the heat resistance of the microfibrillated cellulose. For micronization treatment, the starting pulp is dispersed in water and micronized using a publicly known micronization device such as a beater, single disc refiner, double disc refiner or high-pressure homogenizer. The treatment concentration suitable for micronization will differ, depending on the device used, and may therefore be set as desired.

(Multistage micronization)

When the cellulose is to be micronized in multiple stages, it is effective to combine two or more micronization devices with different micronization mechanisms or shear rates. The method for multistage micronization is preferably multistage micronization using disc refiners with different disc constructions, or micronization with a high-pressure homogenizer after micronization with a disc refiner. The disc refiner used may be either a single disc refiner or a double disc refiner.

(Multistage micronization with multiple disc refiners)

For micronization in multiple stages using more than one disc refiner, it is preferred to use at least two refiners having different disc constructions. Using refiners with different disc constructions will allow control of the various shape parameters for the microfibrillated cellulose, i.e. the fibrillation index, average fiber length and mean fiber diameter.

(Disc refiner disc structure)

Modifying the disc structure of the disc refiner is an effective means for controlling the shape parameters of the microfibrillated cellulose. The important features of a disc refiner structure are the blade width, groove width and the blade/groove ratio (the blade width divided by the groove width), with the blade/groove ratio being most important for production of fibrillated fibers. If the blade/groove ratio is low the cutting action on the fibers will be larger, thus reducing the fiber lengths, while if the blade/groove ratio is high the action of grinding (beating) the fibers will be greater, thus increasing the fibrillation index. Since it is important for nonwoven fabric A of the embodiment to include fibrillated fibers, the blade/groove ratio is preferably 0.2 or higher, more preferably 0.4 or higher and most preferably 0.5 or higher. With a constant blade/groove ratio, smaller absolute values for the blade width and groove width will yield more fine, homogeneous microfibrillated cellulose.

(Interblade distance for disc refiner treatment)

For micronization with a disc refiner, it is also important to control the distance between the two discs (the rotary blade and fixed blade) (this will hereunder be referred to as the "interblade distance"). Controlling the interblade distance will allow control of the average fiber length of the microfibrillated cellulose, with a smaller interblade distance resulting in a smaller average fiber length. For pre-treatment, the interblade distance is preferably 0.05 mm to 2.0 mm, and for post-treatment the interblade distance is preferably 0.05 mm to 1.0 mm. When adjusting the interblade distance, preferably the interblade distance is gradually narrowed from a wide interblade distance to the target interblade distance, as such control will help to prevent clogging or overload of the device, and to yield microfibrillated cellulose with a narrow distribution of fiber length and fiber diameter, and high homogeneity.

(Number of passes in disc refiner treatment)

The degree of micronization can also be controlled by the number of times the cellulose passes through the disc section (hereunder referred to as "number of passes"). By increasing the number of passes it is possible to obtain cellulose fibers having a uniform distribution of fiber diameter and fiber length. The "number of passes", for the purpose of the present specification, is the number of times refiner treatment is carried out after the interblade distance has been set to the target value. The number of passes of the disc refiner is preferably 5 times or more, more preferably 20 times or more and even more preferably 40 times or more. A greater number of times is preferred since the distribution of fiber shapes will gradually converge to be constant, but from the standpoint of productivity, the upper limit for the number of passes is 300 times or less.

(Method for controlling number of passes in disc refiner treatment)

The method for controlling the number of passes may be a method in which one tank is used for each refiner, and the slurry is circulated alone, controlling the number of passes based on the flow rate, or a method in which two tanks are used for each refiner, and the slurry is reciprocated between tanks while carrying out refiner treatment. The former method allows the equipment to be simplified. In the latter case, the cellulose reliably passes through the disc section during each treatment, allowing microfibrillated cellulose with higher homogeneity to be obtained.

(Multistage micronization by combination of disc refiner and high-pressure homogenizer)

Another preferred aspect is micronization treatment of the disc refiner-micronized cellulose fibers, using a high-pressure homogenizer. A high-pressure homogenizer has a greater effect of narrowing fibers than a disc refiner, and its combination with micronization using a disc refiner can yield narrow elongated microfibrillated cellulose.

(Method for producing synthetic pulp)

Synthetic pulp can be obtained by a spin draw process on a prepared polymer, a flash-spinning method from a solution or emulsion, a strip fiber method by uniaxial stretching of a film, or a shear polymerization method in which a monomer is polymerized under shearing stress. Acrylic pulp may be BiPUL (registered trademark of Japan Exlan Co., Ltd.) and aramid pulp may be Kevlar (registered trademark of DuPont Corp.) or TIARA (registered trademark of Daicel Miraizu, Ltd.). It may also be produced by high-pressure homogenizer treatment, in the same manner as micronized cellulose.

(Non-fibrillated fibers)

Nonwoven fabric A preferably includes non-fibrillated fibers in addition to the fibrillated fibers. As used herein, "non-fibrillated fibers" means fibers made of a fibrous material and having fibers without a branched structure. The non-fibrillated fibers used may be natural fibers, synthetic fibers, semisynthetic fibers or inorganic fibers. Examples of polymers composing non-fibrillated fibers include thermoplastic resins such as polyolefins, polyesters, polyamides (aromatic or aliphatic), acrylic polymers, polyvinyl alcohol, polylactic acid, polyphenylene ether, polyoxymethylene and polyphenylene sulfide, thermosetting resins such as epoxy resins, thermosetting modified polyphenylene ether resins, thermosetting polyimide resins, urea resins, allyl resins, silicon resins, benzoxazine resins, phenol resins, unsaturated polyester resins, bismaleimide-triazine resins, alkyd resins, furan resins, melamine resins, polyurethane resins and aniline resins, and cellulose, chitin and chitosan. Examples of inorganic materials to compose non-fibrillated fibers include glass, ceramics,

8

cement, metals, carbon fibers and slag. Such non-fibrillated fibers may be used alone or in combinations of more than one. Non-fibrillated fibers are preferably selected in consideration of properties including heat resistance and chemical resistance, depending on the member in which they are to be applied, and it may be polypropylene, polyamide 6, polyamide 66, polyphenylene ether, polyethylene terephthalate, or combinations thereof. In consideration of the moldability of nonwoven fabric A, it preferably includes polyethylene terephthalate fibers, in particular.

(Mean fiber diameter of non-fibrillated fibers)

The non-fibrillated fibers have a mean fiber diameter of preferably 0.1 $\mu$m or greater. The mean fiber diameter of the non-fibrillated fibers was measured by the following procedure.

(1) The weight [g] of non-fibrillated fibers with lengths of 1,000 m was measured in terms of [tex].
(2) The tex was converted to mean fiber diameter by the following formula:

$$\text{Mean fiber diameter } [\mu m] = 2 \times [T \times 1{,}000/(S \times \pi)]^{0.5}$$

{where T: Tex [tex], S: true density of material [g/cm$^3$]}.

If the mean fiber diameter of the non-fibrillated fibers is less than 0.1 $\mu$m, they will fail to be uniformly mixed when mixed with the fibrillated fibers, and it will not be possible to obtain nonwoven fabric A with a sufficiently micronized interior. A larger mean fiber diameter of the non-fibrillated fibers increases the rigidity of the fibers themselves and also increases the rigidity of nonwoven fabric A, and therefore high sound-insulating properties are exhibited in the low frequency range as according to the rigidity rule. The mean fiber diameter of the non-fibrillated fibers is more preferably 1.0 $\mu$m or greater, even more preferably 3.0 $\mu$m or greater and most preferably 5.0 $\mu$m or greater.

Examples of methods for producing nonwoven fabric A include the wet-laid method described below and pulp molding methods, and using such production methods causes the fibrillated fibers to crosslink between the fibers of the non-fibrillated fibers while being entangled in a complex manner. Since crosslinking of the fibrillated fibers increases the rigidity of nonwoven fabric A as a binder, a greater number of crosslinked fibrillated fibers results in higher rigidity of nonwoven fabric A and a higher sound-insulating property in the low frequency range, according to the rigidity rule. A larger number of crosslinked fibrillated fibers also increases the unit thickness flow resistance and tortuosity of nonwoven fabric A, and improves the sound-insulating property of nonwoven fabric A. If the mean fiber diameter of the non-fibrillated fibers is increased, the number of non-fibrillated fibers per unit volume is reduced, thus reducing the number of crosslinkable fibrillated fibers. The non-crosslinked fibrillated fibers are therefore present in a manner fitting around the outer periphery of the non-fibrillated fibers. The degree to which the non-crosslinked fibrillated fibers contribute to improved sound-insulating properties of nonwoven fabric A is less than that of the crosslinked fibrillated fibers. Therefore, the mean fiber diameter of the non-fibrillated fibers is preferably 100.0 $\mu$m or smaller, more preferably 30.0 $\mu$m or smaller, even more preferably 15.0 $\mu$m or smaller and most preferably 10.0 $\mu$m or smaller.

(Fiber lengths of non-fibrillated fibers)

The fiber lengths (also known as the cut lengths) of the non-fibrillated fibers are preferably 1 mm or greater. Three-dimensional molding will be further facilitated within this range, helping to obtain a more homogeneous nonwoven fabric and a more uniform sound-insulating effect. A long fiber length will also increase the rigidity of the nonwoven fabric, and therefore the fiber length of the non-fibrillated fibers is more preferably 3 mm or greater and even more preferably 5 mm or greater. The upper limit is preferably 30 mm or less from the viewpoint of moldability of the nonwoven fabric.

(Fibrillated fiber content)

Nonwoven fabric A preferably contains fibrillated fibers at 1 wt.% or greater, based on the total weight of nonwoven fabric A. Within this range, the fibrillated fibers will be able to further contribute to sound absorption in the low frequency range. By including numerous fibrillated fibers, the strength of nonwoven fabric A is increased and shedding of the fibers from the surface is reduced. Since the unit thickness flow resistance is also increased, the sound-insulating property is improved. From the same viewpoint, it is more preferably 2.0 wt.% or greater, especially preferably 3.0 wt.% or greater, even more preferably 5.0 wt.% or greater and most preferably 10.0 wt.% or greater. However, since an excessively high fibrillated fiber content will reduce handleability due to excessive rigidity and will lower the sound absorption coefficient caused by excessive unit thickness flow resistance, the content is preferably 100 wt.% or lower, more preferably 90 wt.% or lower and even more preferably 30 wt.% or lower.

(Bulk density of nonwoven fabric A)

The bulk density of nonwoven fabric A is preferably 30 kg/m$^3$ or higher. If the bulk density is within this range it will be possible to obtain suitable air permeability to facilitate the sound absorption effect. The bulk density is more preferably 100 kg/m$^3$ or higher, even more preferably 200 kg/m$^3$ or higher and most preferably 300 kg/m$^3$ or higher. If the bulk density of nonwoven fabric A is too large, the unit thickness flow resistance will also be too high, while the sound absorption effect will be impaired. The upper limit for the bulk density is preferably 10,000 kg/m$^3$ or lower, more preferably 5,000 kg/m$^3$ or lower and even more preferably 1000 kg/m$^3$ or lower.

The bulk density of nonwoven fabric A is calculated by the following formula:

$$\text{Bulk density [kg/m}^3] = \text{surface density [g/m}^2]/\text{thickness [mm]}.$$

The surface density of nonwoven fabric A was recorded as the surface density determined by measuring the weight of nonwoven fabric A cut out to 25 cm-square using an electronic scale (GX-8K2 by A&D Co., Ltd.), and multiplying by 16. The thickness of nonwoven fabric A was calculated by the method described above.

When the bulk density is equal to the surface density, it can be controlled by adjusting the material thickness, the material thickness being adjustable by the method described above.

(Three-dimensional shaping of nonwoven fabric A)

Nonwoven fabric A can be easily formed into a three-dimensional structure, to form a structure having a homogeneous surface and being free of seams or gaps. The term "three-dimensional structure" means a structure for nonwoven fabric A that is not two-dimensional (planar or flat), but instead has at least a curved structure (hereunder also referred to as either "three-dimensional" or "spatial structure").

When a flat air permeability-modifying layer such as a commonly used nonwoven fabric is applied in a three-dimensional structure, the air permeability-modifying layer is disposed on the sound-absorbing material surface via cutting, bending and attaching, during which time partial creation of an overlapping structure, or gaps and folds, in the nonwoven fabric become unavoidable. This produces variation in the air permeability, making it impossible to obtain homogeneous sound absorption properties over all of the surfaces. If nonwoven fabric A is processed three-dimensionally, however, the surface becomes uniform with a structure lacking seams or gaps, so that a consistent sound-insulating property can be obtained on all surfaces of nonwoven fabric A, even applied against a sound source with complex waveforms, for an excellent overall sound-insulating property.

(Method for producing nonwoven fabric A)

The method for producing nonwoven fabric A is not particularly restricted, and may be a method that includes dispersing the non-fibrillated fibers and fibrillated fibers in a liquid medium, and removal and drying of the solvent by filtration and pressing. Mixing the non-fibrillated fibers and fibrillated fibers in a liquid medium allows nonwoven fabric A with a more homogeneous internal structure to be obtained. A molding method as described above makes processing possible into any desired shape, preferably by a wet-laid method or pulp molding method. Using a wet-laid method can yield a two-dimensional flat molded article (i.e. a "nonwoven fabric"), while using a pulp molding method allows shaping into complex three-dimensional shapes. Several different pulp molding methods exist which are suitable, depending on the desired molded article. Such methods include the Thick Wall method, in which a molded article having high load resistance is obtained with a very large film thickness of 5 mm to 10 mm, the Transfer Mold method, in which a smooth molded article having a surface with a film thickness of 3 mm to 5 mm is obtained, the Thermoformed Mold method, in which a complex shape with a film thickness of 1 mm to 3 mm is obtained, the PIM (Pulp Injection Mold) method, in which a complex shape is obtained using a boss or rib, as for ordinary plastic molded articles, and the PF (Pulp Forming) method, in which a lightweight, soft molded article is obtained by foaming in a die. Other systems not within this classification may also be employed, so long as they allow three-dimensional shaping. Various additives may also be added to the liquid medium during molding.

(Liquid medium during molding)

The liquid medium used for molding is not particularly restricted, and a publicly known liquid medium such as water or an organic solvent may be used. While it is preferred to use water in consideration of handleability and low environmental load, a non-polar organic solvent with lower surface tension may be used for the purpose of preventing aggregation when drying and lowering the air permeability resistance per unit thickness. When water is used as the liquid medium, a surfactant may also be added to control the surface tension.

(Molding additives)

By adding a papermaking dispersant or binder and a crosslinking agent as an additive during molding, it is possible to control the handleability, including strength and fiber shedding, as well as the interior uniformity and surface smoothness, of nonwoven fabric A. A papermaking dispersant is a surfactant used to facilitate defibration of the bundled fibrillated fibers in a liquid medium, or a viscous agent used to adjust the viscosity of the liquid medium and prevent aggregation of the fibers, and it allows control of the air permeability resistance per unit thickness by improving the smoothness or homogeneity of the surface and providing uniformity in the internal structure. It should be noted that the added surfactant will also affect the surface tension of the liquid medium. A binder is an adhesive component such as starch, and it adheres together the fibers to allow control of the structural strength and air permeability resistance per unit thickness. A crosslinking agent is an isocyanate or polyurethane, which by chemically or physically crosslinking the intertwined points of the fibers can prevent shedding of the fibers and adjust their strength. When a material having a hydrophilic functional group such as a hydroxyl, carbonyl, carboxyl or amino group is used for the fibrillated fibers or non-fibrillated fibers of nonwoven fabric A, repeated moisture absorption in the air can result in aggregation of the fibers, producing changes in the microstructure of nonwoven fabric A. By constraining the fibers with a crosslinking agent it is possible to stop such movement of the fibers and inhibit aggregation. Such additives may be used alone or in combinations of two or more.

(Blackening of nonwoven fabric A)

Automobile parts are preferred to be black in color so that fouling is less visible. The method of blackening nonwoven fabric A may be black staining of at least one type of non-fibrillated fiber among the fibrillated fibers. Methods for blackening fibrillated fibers and non-fibrillated fibers include methods of coating black materials onto the fibers, and methods of pre-adding black materials into the fibers. Examples of coloring materials include black powders such as carbon black, titanium-based black pigments, iron oxide powder, titanium oxynitride powder and lower-oxidation titanium oxide powder, as well as black fibers such as carbon fibers and carbon nanotubes. From the viewpoint of blackening of nonwoven fabric A it is preferred to blacken both the fibrillated fibers and non-fibrillated fibers, but from the viewpoint of cost and labor efficiency, either one of them alone may be blackened. In this case it is preferably the non-fibrillated fibers that are blackened, from among the fibrillated fibers and non-fibrillated fibers, from the viewpoint of ease of dyeing and lower dye usage.

(Application of flame retardant to nonwoven fabric A)

From the viewpoint of safety, an automobile part is preferably a material with high flame retardance to protect against occurrence of fire. Nonwoven fabric A can be given increased flame retardance by applying a flame retardant. The method of applying the flame retardant to nonwoven fabric A may be a method in which the flame retardant is dispersed in a liquid and applied by blasting, brush painting, coating, pouring, soaking, immersion or the like. In addition, during production of nonwoven fabric A, the non-fibrillated fibers and fibrillated fibers may be pre-dispersed in the liquid medium with a flame retardant to form a nonwoven fabric with the flame retardant adhering to it. The type of flame retardant may be a halogen-based flame retardant, phosphorus-based flame retardant, nitrogen-based flame retardant or inorganic flame retardant. Specific halogen-based flame retardants include chlorinated paraffins, cyclic aliphatic chlorine compounds (Dechlorane Plus), aliphatic bromine compounds and aromatic bromine compounds. Phosphorus-based flame retardants include phosphoric acid esters (monomer types and condensation types), halogen-containing phosphoric acid esters, phosphinic acid metal salts, intumescent flame retardants (IFR), red phosphorus, APP (ammonium polyphosphate), melamine phosphate and esteramide phosphate. Nitrogen-based flame retardants include melamine, melamine derivatives and guanidine compounds. Inorganic flame retardants include magnesium hydroxide, aluminum hydroxide, antimony compounds ($Sb_2O_3$), tin compounds (zinc stannate and zinc hydroxylstannate), boron compounds (zinc borate) MMT, zirconium compounds and molybdenum compounds (molybdenum oxide). Others in addition to these include silicone-based flame retardants, hindered amine compounds and azoalkane compounds. Of these, phosphorus-based flame retardants characteristically form carbonized coatings (char) on material surfaces by dehydrating action, and block oxygen and heat. Nonwoven fabric A with a phosphorus-based flame retardant therefore preferably employs the phosphorus-based flame retardant to help prevent the spread of flames when fire has occurred inside or outside the vehicle.

<Porous body B>

Examples for porous body B include, but are not limited to, publicly known porous materials such as nonwoven fabrics, felt and foam. Nonwoven fabric A has a sound-insulating property, but nonwoven fabric A itself also vibrates vigorously in the frequency range of the natural frequency of nonwoven fabric A, generating secondary frequency sounds. Therefore, the sound-insulating property is lower in the frequency range of the natural frequency of nonwoven fabric A, compared to the other frequency ranges. When porous body B is layered with nonwoven fabric A, porous body B suppresses vibration of nonwoven fabric A itself, while porous body B itself also contributes to soundproofness as a sound-absorbing material. In particular, since the sound frequencies in the intrinsic region of nonwoven fabric A (the region where the sound-insulating property is reduced) is absorbed, it is possible to exhibit a high sound-insulating property in all frequency ranges. For porous body B, the fibers composing a nonwoven fabric or felt may be natural fibers, synthetic fibers, semisynthetic fibers or inorganic fibers. Examples of inorganic materials include glass, ceramics, cement, metals, carbon fibers and slag. Such fibers may be used alone or in combinations of more than one.

Examples of polymers to compose porous body B include thermoplastic resins such as polyolefins, polyesters, polyamides (aromatic or aliphatic), acrylic polymers, polyvinyl alcohol, polylactic acid, polyphenylene ether, polyoxymethylene and polyphenylene sulfide, and thermosetting resins such as epoxy resins, thermosetting modified polyphenylene ether resins, thermosetting polyimide resins, urea resins, allyl resins, silicon resins, benzoxazine resins, phenol resins, unsaturated polyester resins, bismaleimide-triazine resins, alkyd resins, furan resins, melamine resins, polyurethane resins and aniline resins. Examples of materials to compose a foamed body for porous body B include thermoplastic resins such as polyolefins, polyesters, polyamides (aromatic or aliphatic), acrylic polymers, polyvinyl alcohol, polylactic acid, polyphenylene ether, polyoxymethylene and polyphenylene sulfide, and thermosetting resins such as epoxy resins, thermosetting modified polyphenylene ether resins, thermosetting polyimide resins, urea resins, allyl resins, silicon resins, benzoxazine resins, phenol resins, unsaturated polyester resins, bismaleimide-triazine resins, alkyd resins, furan resins, melamine resins, polyurethane resins and aniline resins.

(Thickness of porous body B)

Porous body B preferably has a thickness of 1 mm or greater. The thickness of porous body B is measured by the same method as the thickness of nonwoven fabric A. If the thickness is low, the sound absorption property will be increased only in high frequency ranges, but if the thickness is increased, the sound absorption property will increase even in lower frequency ranges. The thickness of porous body B is therefore more preferably 5 mm or greater. The upper limit is not particularly restricted, but from the viewpoint of reducing space requirements for the soundproof material, it is preferably 100 mm or smaller, more preferably 30 mm or smaller, even more preferably 10 mm or smaller and most preferably 8 mm or smaller.

(Surface density of porous body B)

The porous body B has a surface density of preferably 100 $g/m^2$ or higher. The surface density of porous body B is measured by the same method as the surface density of nonwoven fabric A. If the surface density is low, the sound absorption property will be increased only in high frequency ranges, but if the surface density is increased, the sound absorption property will increase even in lower frequency ranges. The surface density is more preferably 200 $g/m^2$ or higher and even more preferably 250 $g/m^2$ or higher. The upper limit is not particularly restricted but is preferably 10,000 $g/m^2$ or lower from the viewpoint of handleability.

(Hole structure of porous body B)

The porous structure of porous body B is preferably an open-cell structure rather than a closed-cell structure. Open cells have the voids of the porous structure continuously connected. Consequently, sound penetrates into the material and sound energy hitting the material walls is reduced and reflected, thus reducing the energy that returns and thereby increasing the sound absorption coefficient. Closed cells, on the other hand, are in an independent state without connected voids. With closed cells, therefore, sound does not penetrate into the material and the sound absorption coefficient is lower. For distinguishing between an open-cell structure and a closed-cell structure, it can be judged that the structure is an open-cell structure if gas that has contacted with one side of a sample in a common air permeability test is confirmed to pass through the voids in the sample to the opposite side, or that it is a closed-cell structure if this is not confirmed.

(Unit thickness flow resistance of porous body B)

As mentioned above, porous body B preferably has an open-cell structure, but if the unit thickness flow resistance of porous body B is high, sound will be less likely to penetrate into the material and the sound absorption coefficient will also be reduced. The unit thickness flow resistance of porous body B is preferably 5,000 NS/m$^4$ or greater, more preferably 20,000 NS/m$^4$ or greater and even more preferably 50,000 Ns/m$^4$ or greater. The upper limit is preferably 5,000,000 Ns/m$^4$ or lower and more preferably 1,000,000 Ns/m$^4$ or lower.

(Fiber diameter of porous body B as nonwoven fabric)

A nonwoven fabric is an example of a porous material to be used in porous body B. The fiber diameter of the nonwoven fabric is preferably 500 μm or smaller. As mentioned above, when air passes through a nonwoven fabric, sound absorption in the nonwoven fabric occurs by a mechanism in which vibration is converted to thermal energy by friction between the air and fibers, thus reducing vibration. For a nonwoven fabric of a given unit volume, a smaller fiber diameter increases the proportion of contact between the fibers and air that passes through as sound, and increases the amount of conversion as heat energy, resulting in a higher sound absorption property. The fiber diameter is preferably 100 μm or smaller and more preferably 50 μm or smaller. If the fiber diameter is too small, the voids will be too small, making it difficult for sound to infiltrate into the interior of the material, and conversely lowering the sound absorption coefficient. The lower limit is therefore preferably 100 nm or greater.

(Fiber length of porous body B as nonwoven fabric)

The fiber length of porous body B as the nonwoven fabric is preferably 3 mm or greater. Within this range, porous body B self-supports as a nonwoven fabric, while shedding is also reduced due to entanglement between the fibers. The fiber length is preferably 10 mm or greater and more preferably 30 mm or greater. The upper limit is not particularly restricted, and for example, the nonwoven fabric of porous body B may even be composed of an extremely long single filament, such as a fiber spun by an electrospinning method or meltblown method. The method of improving the self-supporting property of the nonwoven fabric may be a method of joining the entanglement points of the fibers, such as a mat binder method, or a method of artificially tangling the fibers, such as a needle punching method.

<Method of laminating nonwoven fabric A and porous body B>

Nonwoven fabric A may be laminated with porous body B by any of a variety of different means. The laminating method may be simply natural overlapping without bonding between nonwoven fabric A and porous body B, but they are preferably bonded since bonding causes porous body B to function as a binder for nonwoven fabric A, thereby suppressing vibration of nonwoven fabric A and improving the sound-insulating property. Examples of methods for bonding both together include a method of heating only the surface of nonwoven fabric A with an IR heater, for joining by heat fusion, and a method of coating nonwoven fabric A with a hot-melt adhesive using a curtain spray system and then heating for heat fusion. When a nonwoven fabric is used as porous body B, an aqueous dispersion of nonwoven fabric A and porous body B may be prepared, and lamination carried out by forming in a wet-laid method in the order: nonwoven fabric A → porous body B (or porous body B → nonwoven fabric A). For layering as a three-dimensional molded article, it is preferred to use a pulp molding method. Specifically, first the fibers for nonwoven fabric A and porous body B are each water-dispersed to prepare water baths: water bath A and water bath B. A shaping die with a wire mesh surface may then be immersed and suctioned in the order: water bath A → water bath B (or water bath B → water bath A), layering each onto the shaped die to anchor it into the shape of the die. Incidentally, a higher bonding strength prevents detachment from porous body B by vibration action when nonwoven fabric A vibrates due to sound transmission. The tensile shear strength (according to JIS K6849) is preferably 5 MPa or higher and more preferably 10 MPa or higher. The upper limit is not particularly restricted and may be 1 GPa or lower, as one aspect.

<Order of laminating nonwoven fabric A and porous body B>

In regard to the layering order of nonwoven fabric A and porous body B, there is no effective difference in terms of the sound-insulating property, whether nonwoven fabric A or porous body B faces the sound source side. From the viewpoint of the sound absorption property, however, the effect varies, depending on the layering order. When it is desired to increase the sound absorption coefficient in the low frequency range, placement of nonwoven fabric A on the sound source side is preferred because sound in the low frequency range will be converted to thermal energy by vibration of the plate of nonwoven fabric A, allowing efficient absorption of sound. The porous body B performs the role of an air layer in this case. When it is desired to increase the sound absorption coefficient in the high frequency range, on the other hand, placement of porous body B on the sound source side is preferred because sound waves will be able to penetrate into porous body B and sound in the high frequency range will be converted to thermal energy by fiber friction, allowing more efficient sound absorption.

<Multilayer structure>

The soundproof material of the embodiment is laminated with at least two layers, i.e. nonwoven fabric A and porous body B. From the viewpoint of improving the sound-insulating property as a soundproof material, nonwoven fabric A, porous body B and a sound-insulating material are preferably layered in that order, as a structure known as a "double wall". There are no particular restrictions on the sound-insulating material, and it may be a non-air-permeable material such as a plastic sheet or metal sheet. Low-air permeable woven fabrics, nonwoven fabrics and open-cell foamed bodies having unit thickness flow resistance of 500,000 Ns/m$^4$ or greater may also be used as sound-insulating materials, or nonwoven fabric A may be used as a sound-insulating material. When nonwoven fabric A and a sound-insulating material are directly layered, the nonwoven fabric A and sound-insulating material both transmit sound wave vibration, and the transmission loss of the layered body is significantly lower than the sum of each material. If porous body B is inserted between the layered body and each material is completely independent, transmission loss of the layered body can approach the sum of each material. This effect is especially significant in the high frequency range. A larger thickness of porous body B inhibits propagation of vibration between nonwoven fabric A and the sound-insulating material, and increases the sound-insulating property of the layered body. Therefore, the upper limit for the thickness of porous body B is not particularly restricted but may be 100 mm or smaller in terms of practicality. The lower limit is preferably 3 mm or larger, more preferably 5 mm or larger, even more preferably 8 mm or larger, yet more preferably 10 mm or larger and most preferably 15 mm or larger. While the double wall effect is exhibited even if the thicknesses of nonwoven fabric A and the sound-insulating material result in a thin-film thickness of 0.001 mm, a larger thickness results in a higher sound-insulating property for the layered body. The upper limit is therefore not particularly restricted, but may be 100 mm or smaller in terms of practicality. The lower limit is preferably 0.1 mm or larger, more preferably 0.5 mm or larger and even more preferably 1.0 mm or larger. The lower limit is especially preferably 2.0 mm or larger and most preferably 3.0 mm or larger.

As the order of lamination, it is sufficient for porous body B to be disposed between nonwoven fabric A and the sound-insulating material, and from the viewpoint of sound-insulating properties, there is no difference in the effect whether nonwoven fabric A or the sound-insulating material is facing the sound source side. From the viewpoint of sound absorption, however, the one with lower air permeability is preferably situated on the sound source side, considering that sound waves are more efficiently absorbed if incident to porous body B. No double wall effect is obtained if porous body B is situated at one side and nonwoven fabric A and the sound-insulating material are directly layered. In regard to the method of laminating the layered body, a double wall effect is exhibited even if the method is natural overlaying, but the method is preferably bonding since bonding allows the intermediate porous body B to function as a binder for nonwoven fabric A and the sound-insulating material, thus suppressing vibration of nonwoven fabric A and the sound-insulating material and improving the sound-insulating property. The method of bonding porous body B of the sound-insulating material may be heat fusion, the use of an adhesive, or the use of adhesive tape. When layering of the double walls is to be applied for soundproofing of a sound source device, the enclosure of the sound source device itself may be considered to be a sound-insulating material, and a double wall effect can be easily obtained by layering in the order: nonwoven fabric A/porous body B/enclosure.

<Uses>

The soundproof material of the invention is a soundproof material that, by modification of the composition of a layer formed on a porous material, exhibits sound absorption performance while exhibiting excellent sound-insulating properties in a wide frequency range of 200 Hz to 2000 Hz. The soundproof material of the invention can be molded into a two-dimensional sheet shape, but if nonwoven fabric A is also molded by seamless three-dimensional molding then it will have excellent heat resistance and flame retardance as a thin layer, and therefore when it is used in an automobile it will be able to follow complex mechanical shapes such as devices serving as sound sources. The following are common major uses. Suitable uses for automobiles may be as large parts such as a hood silencer, dash outer silencer, dash inner silencer (dash panel pad), fender liner, wheel house liner, cowl inner silencer, dash inner silencer, side door trim, luggage door trim, luggage side trim, luggage mat, floor silencer (floor under cover or floor carpet), engine silencer, head lining, rear shelf, tailgate trim, soundproof duct, Melsheet, transmission insulator or engine under cover (or a motor under cover for an EV), or for smaller three-dimensional covers, as a cover for a drive unit such as an engine, engine-mounted reduction gear, drive shaft, torque converter, gear shifter, speed reduction device, differential gear or limited slip differential, a cover for electrical equipment such as an electric pump (for water or oil circulation), air conditioning electric compressor, air conditioner duct, electric actuator, inverter or converter, and for EVs in particular, as a cover for an electric drive unit such as an electric motor or motor-mounted reduction gear. Since the soundproof material of the invention allows three-dimensional molding in a thin-layer in a seamless manner, it is more suitable for a smaller-sized three-dimensional cover, and can be used as a cover for electrical equipment such as an electric pump (for water or oil circulation), air conditioning electric compressor, air conditioner duct, electric actuator, inverter or converter, or as a cover for an electric drive unit such as an electric motor or motor-mounted reduction gear, as devices that generate noise vibrations at 200 Hz to 2000 Hz.

EXAMPLES

The present invention will now be explained in greater detail using Examples and Comparative Examples, with the understanding that the invention is not limited to the Examples.

The methods of measurement will be explained first.

<Measuring methods>

<Mean fiber diameter (Method A and Method B), average fiber length, fibrillation index and fine content in area of fibrillated fibers>

The mean fiber diameter (Method A), average fiber length, fibrillation index and fine content in area of the fibrillated fibers were measured by the following procedure using a fiber image analyzer (Morfi-Neo by TechPap), under conditions with a photograph time of 3 minutes (measured with at least 120,000 fibers). The minimum fiber length measured was 20 μm.

(1) Fibrillated fibers were dispersed in purified water to prepare a 1 L aqueous dispersion. The final solid concentration of the fibrillated fibers was 0.004 wt.%. For an aqueous dispersion of fibrillated fibers at 2 wt.% or lower, dispersion treatment was carried out by simple mixing with a spatula. For an aqueous dispersion, or a wet cake or powder at 2 wt.% or greater, a high-shear homogenizer (trade name: ULTRA-TURRAX T18 by IKA Co.) was used for dispersion treatment with treatment conditions of 25,000 rpm × 5 min.
(2) The aqueous dispersion prepared in (1) was supplied to an autosampler for measurement.
(3) The measurement results for the Mean Fibre Width, μm, Fine-Fibers Mean length, μm, Macro Fibrillation index, %, Fine content in area, %, were read off as the mean fiber diameter (Method A), average fiber length, fibrillation index and fine content in area, respectively.

The mean fiber diameter of the fibrillated fibers (Method B) was measured by the following procedure using a specific surface area/pore distribution analyzer (NOVA-4200e by Quantachrome Instruments). Fibrillated fibers that aggregated by drying as fibrillated cellulose fine fibers were measured after the following pretreatment.

[Pretreatment]

(1) The fibrillated fine fiber aqueous dispersion was filtered to prepare a wet cake.
(2) The obtained wet cake was added to tert-butanol and diluted with tert-butanol to a fibrillated fiber solid concentration of 0.5 wt%, and a high-shear homogenizer (trade name: "ULTRA-TURRAX T18" by IKA Co.) was used for dispersion treatment with treatment conditions of 25,000 rpm × 5 min.
(3) The obtained dispersion was weighed out to a basis weight of 10 g/m$^3$ and filtered with filter paper to obtain a sheet.
(4) Without being released from the filter paper, the obtained sheet together with the filter paper was sandwiched by two larger filter paper sheets, and dried for 5 minutes in an oven at 150°C while pressing the edges of the filter paper with a weight from above, to obtain a porous sheet.

[Measurement of specific surface area and calculation of fiber diameter]

(1) The fibrillated fibers (porous sheet fabricated by pretreatment) in an amount of 0.2 g by solid content were dried in a vacuum at 120°C for 5 minutes.
(2) After drying, the adsorption of nitrogen gas at the boiling point of liquid nitrogen was measured at 5 points with a relative vapor pressure (P/P0) in the range of 0.05 to 0.2 (multipoint method), after which the BET specific surface area (m$^2$/g) was calculated by the program provided by the apparatus.
(3) The mean fiber diameter (Method B) was calculated from the BET specific surface area value Y (m$^2$/g) by the

following formula:

$$\text{Mean fiber diameter (nm)} = 1/(2.5 \times \rho \times Y \times 10^{-4})$$

using the average fiber length X (nm) and the density $\rho$ (g/cm$^3$) of the fibrillated fibers.

<Thickness of nonwoven fabric A and porous body B>

The thickness of the sample was measured by the following procedure.

(1) A 5 cm $\times$ 5 cm size section was obtained from 5 different locations of a sample.
(2) The thickness of each section was measured using an ABS Digimatic Indicator ID-CX (Mitsutoyo Corp.). The probe used was a $\varphi$15 mm flat probe.
(3) The average value for the 5 locations obtained in step (2) was recorded as the thickness of the sample.

<Self-supporting and fiber shedding properties of nonwoven fabric A>

For each of the Examples and Comparative Examples, a 20 cm-square sample was prepared, and the self-supporting property and fiber shedding of nonwoven fabric A were evaluated based on the following scale.

[Self-supporting property]

G: No bending or breaking when handled with one hand
F: Folding but not damaged when handled with one hand.
P: Tearing when handled with one hand
[Fiber shedding]
G: No adhesion of shed fibers when surface is touched or rubbed with a bare hand
F: Adhesion of shed fibers when surface is rubbed with a bare hand, but no adhesion of shed fibers with touching alone
P: Adhesion of shed fibers when surface is touched with a bare hand

<Measurement of unit thickness flow resistance of nonwoven fabric A>

The unit thickness flow resistance of nonwoven fabric A was measured by the following procedure according to ISO9053, using a flow resistance system (AirReSys by Nihon Onkyo Engineering, Co., Ltd.). First, a predetermined number of $\varphi$42 mm circular discs were cut out from nonwoven fabric A. Air at a flow rate of 0.5 m/s was then flowed through the cut nonwoven fabric A, the difference in pressure of nonwoven fabric A before and after was read off, and the results were standardized based on the flow rate and the thickness of nonwoven fabric A.

<Measurement of porosity of nonwoven fabric A>

The porosity of nonwoven fabric A was calculated using the bulk density and true density of nonwoven fabric A, according to the following formula:

$$\varepsilon \, [\%] = (1 - S_1/S_2) \times 100$$

{where $\varepsilon$: porosity, $S_1$: bulk density, $S_2$: true density}.
The material densities shown below were used for calculation of the true density of nonwoven fabric A. When two different materials were mixed, the total value of their true densities multiplied by the volume ratio was recorded as the true density of nonwoven fabric A.

Cellulose: 1.50 g/cm$^3$
Polyethylene terephthalate (PET): 1.38 g/cm$^3$
Polyacrylonitrile: 1.18 g/cm$^3$
Nylon 66: 1.14 g/cm$^3$
Nylon 6: 1.13 g/cm$^3$

<Measurement of tortuosity of nonwoven fabric A>

The tortuosity of nonwoven fabric A was measured by the following procedure using a tortuosity and characteristic length measuring system (TORVITH by Nihon Onkyo Engineering, Co., Ltd.). First, a predetermined number of $\varphi$42 mm circular discs were cut out from nonwoven fabric A. Next, the sound velocity ratio between the sound velocity in free space without nonwoven fabric A and the sound velocity of sound waves passing through nonwoven fabric A, was squared. Specifically, the time required for 200 to 300 Hz ultrasonic waves from a transmitter to reach a receiver was measured. The square of the sound velocity ratio due to the presence or absence of nonwoven fabric A has a frequency characteristic, and when the inverse of the square root of the frequency is plotted on the abscissa in the ultrasonic range, it is a straight line rising to the right. Since the tortuosity is defined as the value in the limit where frequency approaches infinity, it was calculated as the value of the y-intercept at that point.

<Evaluation of sound-insulating property>

For each of the Examples and Comparative Examples, a WinZac normal incident sound absorption coefficient/transmission loss measuring system (product of Nihon Onkyo Engineering, Co., Ltd.) was used, based on the two-load method, to measure the transmission loss of the sample and evaluate the sound-insulating property. The inner diameter of the acoustic tube was measured to be 40 mm. White noise was used as the sound source. For the multilayer of nonwoven fabric A and porous body B, measurement was carried out so that nonwoven fabric A was on the incident side of the sound wave.

<Fibrillated fibers>

<Fibrillated fibers A>

Fibrillated fibers of polyacrylonitrile (BiPUL, product of Japan Exlan Co., Ltd., 18% solid weight) were used as fibrillated fibers A. The results of evaluating the fibrillation index, fine content in area, average fiber length and mean fiber diameter are shown in Table 1 below.

<Fibrillated fibers B>

Tencel cut filaments (3 mm lengths), as regenerated (type II) cellulose fibers acquired from Sojitz Corp., were placed in a washing net, a surfactant was added, and the mixture was washed with water several times in a washing machine to remove the oil agent on the fiber surfaces. A Labo Pulper (Aikawa Iron Works Co.) was used for simple dispersion of the mixture, followed by delivery to a tank. The slurry was micronized while circulating with a 14-inch single disc refiner (Aikawa Iron Works Co.) equipped with a disc having a 2.5 mm blade width and a 7.0 mm groove width, connected to the tank. Operation was initiated with an interblade distance of 2.0 mm, gradually narrowing the interblade distance to a final interblade distance of 0.05 mm. After the interblade distance reached 0.05 mm, operation was continued while confirming the flow rate, and operation was stopped when the total amount of slurry had passed through the disc section 30 times. Further micronization treatment was carried out using a high-pressure homogenizer (NS015H by Niro Soavi). The slurry was treated in a batch process with five treatments. The obtained microfibrillated cellulose was used as fibrillated fibers B. The results of evaluating the fibrillation index, fine content in area, average fiber length and mean fiber diameter are shown in Table 1 below.

<Fibrillated fibers C>

Linter pulp, as type I natural cellulose acquired from Japan Pulp and Paper Co., was immersed in water to 1.5 wt.%, and a Labo Pulper (Aikawa Iron Works Co.) was used for simple dispersion, followed by delivery to a tank. The slurry was micronized while circulating with a 14-inch single disc refiner (Aikawa Iron Works Co.) equipped with a disc having a 2.5 mm blade width and a 7.0 mm groove width, connected to the tank. Operation was initiated with an interblade distance of 2.0 mm, gradually narrowing the interblade distance to a final interblade distance of 0.05 mm. After the interblade distance reached 0.05 mm, operation was continued while confirming the flow rate, and operation was stopped when the total amount of slurry had passed through the disc section 30 times. The obtained microfibrillated cellulose was used as fibrillated fibers C. The results of evaluating the fibrillation index, fine content in area, average fiber length and mean fiber diameter are shown in Tables 2 and 3 below.

<Fibrillated fibers D>

Fibrillated fibers C were subjected to further micronization treatment using a high-pressure homogenizer (NS015H by Niro Soavi). The slurry was treated in a batch process with ten treatments. The results of evaluating the fibrillation index, average fiber length and mean fiber diameter are shown in Table 2 below.

<Fibrillated fibers E>

Linter pulp, as type I natural cellulose acquired from Japan Pulp and Paper Co., was immersed in water to a linter pulp content of 1.5 wt.%, and a juicer mixer (HBH450 by Transgate Co.) was used for simple dispersion under the conditions: High, 5 min. The obtained microfibrillated cellulose was used as fibrillated fibers E. The results of evaluating the fibrillation index, fine content in area, average fiber length and mean fiber diameter are shown in Table 3 below.

<Production Examples for soundproof material>

<Example 1>

Fibrillated fibers A as fibrillated fibers, and PET staple fibers A (TA04PN, product of Teijin, Ltd., fineness: 0.1 T, mean fiber diameter: 3.0 $\mu$m, cut length: 3 mm) as non-fibrillated fibers, were used to fabricate nonwoven fabric A1 by the following procedure. The fibrillated fibers and non-fibrillated fibers were added to purified water in a solid weight ratio of 10:90 to a final solid concentration of 0.5%, and the mixture was stirred with a household mixer for 4 minutes to prepare a slurry. The prepared slurry was loaded into a batch paper machine (automatic square sheet machine by Kumagai Riki Kogyo Co., Ltd., 25 cm $\times$ 25 cm, 80 mesh) in which a filter cloth (TT35 by Shikishima Canvas Co., Ltd.) was set, to a surface density of 300 g/m$^2$, after which paper-making (dewatering) was carried out with pressure reduction of 50 KPa relative to atmospheric pressure. The aforementioned filter cloth was used to cover the surface of the wet concentrated composition on a filter cloth, and was detached from the wire and pressed for 1 minute at a pressure of 1 kg/cm$^2$. It was then dried for about 120 seconds in a drum dryer set to a surface temperature of 130°C, to obtain a nonwoven fabric A1. The obtained nonwoven fabric A1 was naturally layered with commercially available coarse felt having a thickness of 8.0 mm as porous body B, to form a soundproof material. The physical properties of the obtained nonwoven fabric A1 and porous body B and the soundproof properties of the soundproof material are shown in Table 1.

<Example 2>

Nonwoven fabric A2 was obtained by the same method as Example 1, except that fibrillated fibers B were used as the fibrillated fibers. The obtained nonwoven fabric A2 was naturally layered with commercially available coarse felt having a thickness of 8.0 mm as porous body B, to form a soundproof material. The physical properties of the obtained nonwoven fabric A2 and porous body B and the soundproof properties of the soundproof material are shown in Table 1.

<Example 3>

Nonwoven fabric A3 was obtained by the same method as Example 1, except that fibrillated fibers C were used as the fibrillated fibers, and the solid weight ratio of the fibrillated fibers and non-fibrillated fibers was 5:95. The obtained nonwoven fabric A3 was naturally layered with commercially available coarse felt having a thickness of 8.0 mm as porous body B, to form a soundproof material. The physical properties of the obtained nonwoven fabric A3 and porous body B and the soundproof properties of the soundproof material are shown in Table 1.

<Example 4>

Nonwoven fabric A4 was obtained by the same method as Example 1, except that fibrillated fibers C were used as the fibrillated fibers. The obtained nonwoven fabric A4 was naturally layered with commercially available coarse felt having a thickness of 8.0 mm as porous body B, to form a soundproof material. The physical properties of the obtained nonwoven fabric A4 and porous body B and the soundproof properties of the soundproof material are shown in Table 1.

<Example 5>

Nonwoven fabric A5 was obtained by the same method as Example 4, except that fibrillated fibers and non-fibrillated fibers were used in a solid weight ratio of 20:80. The obtained nonwoven fabric A5 was naturally layered with commercially available coarse felt having a thickness of 8.0 mm as porous body B, to form a soundproof material. The physical properties of the obtained nonwoven fabric A5 and porous body B and the soundproof properties of the soundproof material are shown in Table 1.

<Example 6>

Nonwoven fabric A6 was obtained by the same method as Example 4, except that fibrillated fibers and non-fibrillated fibers were used in a solid weight ratio of 30:70. The obtained nonwoven fabric A6 was naturally layered with commercially available coarse felt having a thickness of 8.0 mm as porous body B, to form a soundproof material. The physical properties of the obtained nonwoven fabric A6 and porous body B and the soundproof properties of the soundproof material are shown in Table 1.

<Example 7>

Nonwoven fabric A7 was obtained by the same method as Example 4, except that PET fibers B (TA04N by Teijin, Ltd., fineness: 0.5 T, mean fiber diameter: 7.0 $\mu$m, cut length: 5 mm) were used as the non-fibrillated fibers. The obtained nonwoven fabric A7 was naturally layered with commercially available coarse felt having a thickness of 8.0 mm as porous body B, to form a soundproof material. The physical properties of the obtained nonwoven fabric A7 and porous body B and the soundproof properties of the soundproof material are shown in Table 1.

<Example 8>

Nonwoven fabric A8 was obtained by the same method as Example 4, except that PET fibers B were used as the non-fibrillated fibers, and the solid weight ratio of the fibrillated fibers and non-fibrillated fibers was 20:80. The obtained nonwoven fabric A8 was naturally layered with commercially available coarse felt having a thickness of 8.0 mm as porous body B, to form a soundproof material. The physical properties of the obtained nonwoven fabric A8 and porous body B and the soundproof properties of the soundproof material are shown in Table 1.

<Example 9>

Nonwoven fabric A9 was obtained by the same method as Example 4, except that PET fibers C (TT04N by Teijin, Ltd., fineness: 1.7 T, mean fiber diameter: 12.0 $\mu$m, cut length: 5 mm) were used as the non-fibrillated fibers, and the solid weight ratio of the fibrillated fibers and non-fibrillated fibers was 20:80. The obtained nonwoven fabric A9 was naturally layered with commercially available coarse felt having a thickness of 8.0 mm as porous body B, to form a soundproof material. The physical properties of the obtained nonwoven fabric A9 and porous body B and the soundproof properties of the soundproof material are shown in Table 2.

<Example 10>

Nonwoven fabric A10 was obtained by the same method as Example 4, except that PET fibers D (TA04N by Teijin, Ltd., fineness: 8.0 T, mean fiber diameter: 30.0 $\mu$m, cut length: 5 mm) were used as the non-fibrillated fibers, and the solid weight ratio of the fibrillated fibers and non-fibrillated fibers was 2:98. The obtained nonwoven fabric A10 was naturally layered with commercially available coarse felt having a thickness of 8.0 mm as porous body B, to form a soundproof material. The physical properties of the obtained nonwoven fabric A10 and porous body B and the soundproof properties of the soundproof material are shown in Table 2.

<Example 11>

Nonwoven fabric A11 was obtained by the same method as Example 4, except that PET fibers D (TA04N by Teijin, Ltd., fineness: 8.0 T, mean fiber diameter: 30.0 $\mu$m, cut length: 5 mm) were used as the non-fibrillated fibers, and the solid weight ratio of the fibrillated fibers and non-fibrillated fibers was 1:99. The obtained nonwoven fabric A11 was naturally layered with commercially available coarse felt having a thickness of 8.0 mm as porous body B, to form a soundproof material. The physical properties of the obtained nonwoven fabric A11 and porous body B and the soundproof properties of the soundproof material are shown in Table 2.

<Example 12>

Nonwoven fabric A12 was obtained by the same method as Example 4, except that fibrillated fibers and non-fibrillated fibers were used in a solid weight ratio of 3:97. The obtained nonwoven fabric A12 was naturally layered with commercially available coarse felt having a thickness of 8.0 mm as porous body B, to form a soundproof material. The physical properties of the obtained nonwoven fabric A12 and porous body B and the soundproof properties of the soundproof material are shown in Table 2.

<Example 13>

Nonwoven fabric A13 was obtained by the same method as Example 4, except that PET fibers C were used as the non-fibrillated fibers, and the solid weight ratio of the fibrillated fibers and non-fibrillated fibers was 40:60. The obtained nonwoven fabric A13 was naturally layered with commercially available coarse felt having a thickness of 8.0 mm as porous body B. The physical properties of the obtained nonwoven fabric A13 and porous body B and the soundproof properties of the soundproof material are shown in Table 2.

<Example 14>

Nonwoven fabric A14 was obtained by the same method as Example 4, except that fibrillated fibers D were used as the fibrillated fibers, and the solid weight ratio of the fibrillated fibers and non-fibrillated fibers was 100:0. The obtained nonwoven fabric A14 was naturally layered with commercially available coarse felt having a thickness of 8.0 mm as porous body B, to form a soundproof material. The physical properties of the obtained nonwoven fabric A14 and porous body B and the soundproof properties of the soundproof material are shown in Table 2.

<Example 15>

Nonwoven fabric A15 was obtained by the same method as Example 4, except that fibrillated fibers and non-fibrillated fibers were used in a solid weight ratio of 100:0. The obtained nonwoven fabric A15 was naturally layered with commercially available coarse felt having a thickness of 8.0 mm as porous body B, to form a soundproof material. The physical properties of the obtained nonwoven fabric A15 and porous body B and the soundproof properties of the soundproof material are shown in Table 2.

<Example 16>

Nonwoven fabric A16 was obtained by the same method as Example 4, except that fibrillated fibers D were used as the fibrillated fibers. The obtained nonwoven fabric A16 was naturally layered with commercially available coarse felt having a thickness of 8.0 mm as porous body B, to form a soundproof material. The physical properties of the obtained nonwoven fabric A16 and porous body B and the soundproof properties of the soundproof material are shown in Table 2.

<Example 17>

Nonwoven fabric A17 was obtained by the same method as Example 4, except that fibrillated fibers E were used as the fibrillated fibers. The obtained nonwoven fabric A17 was naturally layered with commercially available coarse felt having a thickness of 8.0 mm as porous body B, to form a soundproof material. The physical properties of the obtained nonwoven fabric A17 and porous body B and the soundproof properties of the soundproof material are shown in Table 3.

<Example 18>

Nonwoven fabric A18 was obtained by the same method as Example 4. The obtained nonwoven fabric A18 was naturally layered with a commercially available polyester nonwoven fabric having a thickness of 11.0 mm as porous body B, to form a soundproof material. The physical properties of the obtained nonwoven fabric A18 and porous body B and the soundproof properties of the soundproof material are shown in Table 3.

<Example 19>

Nonwoven fabric A19 was obtained by the same method as Example 4. The obtained nonwoven fabric A19 was naturally layered with a commercially available polyurethane foamed body having a thickness of 11.0 mm as porous body B, to form a soundproof material. The physical properties of the obtained nonwoven fabric A19 and porous body B and the soundproof properties of the soundproof material are shown in Table 3.

<Example 20>

Nonwoven fabric A20 was obtained by the same method as Example 4. Also, the obtained nonwoven fabric A20 was naturally layered with a foamed body of polyamide 666 (copolymer of polyamide 66 and polyamide 6) (Sunforce by Asahi Kasei Corp.) having a thickness of 6.0 mm, as porous body B, to obtain a soundproof material. The physical properties of the obtained nonwoven fabric A20 and porous body B and the soundproof properties of the soundproof material are shown in Table 3.

<Comparative Example 1>

After opening fibers by carding, so as to form a two-layer structure with 180 g/m² of sea-island structure fibers and 180 g/m² of polyethylene terephthalate staple fibers (TETRON by Toray Co., Ltd.) with an average fiber length of 51 mm and a single fiber fineness of 2.2 decitex, a web was formed with a cross wrap wafer. The web was worked with a needle punch machine to obtain a nonwoven fabric with a basis weight of 323 g/m² and a thickness of 0.75 mm. The nonwoven fabric was then treated with a 1% aqueous sodium hydroxide solution at a temperature of 95°C and a liquor ratio of 1:40 (weight ratio) to remove the polylactic acid and obtain a nonwoven fabric S1 comprising N6 nanofibers with a mean fiber diameter of 150 nm and polyethylene terephthalate yarn, and having a basis weight of 234 g/m² and a thickness of 1.6 mm. The obtained nonwoven fabric S1 was naturally layered with commercially available coarse felt having a thickness of 8.0 mm as porous body B, to form a soundproof material. The physical properties of the obtained nonwoven fabric S1 and porous body B and the soundproof properties of the soundproof material are shown in Table 3.

<Comparative Example 2>

A nonwoven fabric S2 composed of nanofibers of nylon 66 with a mean fiber diameter of 320 nm was fabricated by electrospinning. The obtained nonwoven fabric S2 was naturally layered with commercially available coarse felt having a thickness of 8.0 mm as porous body B, to form a soundproof material. The physical properties of the obtained nonwoven fabric S2 and porous body B and the soundproof properties of the soundproof material are shown in Table 3.

<Comparative Example 3>

Nonwoven fabric S3 was obtained by the same method as Example 4. The obtained nonwoven fabric S3 was not layered with a porous body B. The physical properties of the obtained nonwoven fabric S3 and the soundproof properties of the soundproof material are shown in Table 3.

<Comparative Example 4>

Nonwoven fabric S4 was obtained by the same method as Example 4, except that PET fibers D were used as the non-fibrillated fibers, and the solid weight ratio of the fibrillated fibers and non-fibrillated fibers was 0:100. The obtained nonwoven fabric S4 was naturally layered with commercially available coarse felt having a thickness of 8.0 mm as porous body B, to form a soundproof material. The physical properties of the obtained nonwoven fabric S4 and porous body B and the soundproof properties of the soundproof material are shown in Table 3.

<Example 21>

A 2-bolt gear-reduction electric motor (product of FastUU, 12 V250W electric motor heavy-duty DC gear-reduction brush motor, with 9-tooth sprocket) was anchored to a 10 mm SUS stage, and noise A (600 Hz) was measured 5 minutes after rotating at 2950 rpm. Next, the electric motor and reduction gear were provided with a 5 mm air-gap, following the shape, and a 1 mm-thick molded cover A was prepared by pulp molding, with the composition of nonwoven fabric 1 of Example 1. The cover was set and rotated at 2950 rpm, and then noise B was measured after 5 minutes. The transmission loss was determined from noise A and B to be 10 dB.

<Example 22>

For Example 21, the electric motor and reduction gear were covered with molded cover A, and then the outer side was covered with 8 mm-thick blended felt. The cover was set and rotated at 2950 rpm, and then noise C was measured after 5 minutes. The transmission loss was determined from noise A and C to be 15 dB.

<Example 23>

For Example 22, the electric motor and reduction gear were covered with molded cover A and blended felt, and then the outer side was covered with a 1 mm-thick polypropylene case. The cover was set and rotated at 2950 rpm, and then noise D was measured after 5 minutes. The transmission loss was determined from noise A and D to be 20 dB.

<Example 24>

A 12 V electric compressor (by NEKPOKKA) was anchored to a 10 mm SUS stage and driven for 5 minutes, after which the noise E (600 Hz) was measured. The electric compressor was then used to produce a 1 mm-thick molded cover B with the composition of nonwoven fabric 1 of Example 1, by pulp molding, in a form following the shape with a 5 mm air-gap. The cover was set and actuated for 5 minutes, after which noise F was measured. The transmission loss was determined from noise E and F to be 10 dB.

<Example 25>

For Example 24, the electric compressor was covered with molded cover B, and then the outer side was covered with 8 mm-thick blended felt. The cover was set and actuated for 5 minutes, after which noise G was measured. The transmission loss was determined from noise E and G to be 15 dB.

<Example 26>

For Example 25, the electric compressor was covered with molded cover B and blended felt, and then the outer side was covered with 1 mm-thick polypropylene case. The cover was set and actuated for 5 minutes, after which noise H was measured. The transmission loss was determined from noise E and H to be 20 dB.

<Example 27>

Natural lamination was carried out in the order: Nonwoven fabric A4 of Example 4 (thickness: 1.0 mm)/coarse felt (thickness: 8.0 mm)/polypropylene sheet (thickness: 1.0 mm), and each sample was cut to a size of 1,000 m $\times$ 1,000 m and the transmission loss was evaluated. The measuring method was by the sound intensity method, conducted according to JIS A 1441. The measuring equipment used was a small reverberation-anechoic chamber (reverberation chamber capacity: 8.9 $m^3$) at the 2nd Acoustic Research Laboratory by Nihon Onkyo Engineering, Co., Ltd. The reverberation chamber side was used as the sound source chamber and the anechoic chamber side as the sound receiving chamber. The transmission loss was calculated by the following formula.

Transmission loss = (i) sound power level impinging on sample - (ii) sound power level permeating through sample,

(i) Sound power level impinging on sample: Calculated from the average sound pressure level at 5 points in the reverberation chamber.
(ii) Sound power level permeating through sample: Calculated from the average sound intensity at the sound wave permeation surface (7 points $\times$ 7 points = 49 points).

As the gripping range for the measuring sample, an open jig with 900 mm sides was used to grip 50 mm on the four outer peripheries. The location of the sound intensity probe was held at 170 mm from the sample surface.
The results for transmission loss of the obtained nonwoven fabric are shown in Table 4.

<Example 28>

For Example 27, natural lamination was carried out in the order: nonwoven fabric A4 (thickness: 1.0 mm)/coarse felt (thickness: 16.0 mm)/polypropylene sheet (thickness: 1.0 mm), and the transmission loss was evaluated. The sound receiving chamber side was the polypropylene plate, and the results of transmission loss are shown in Table 4.

<Example 29>

For Example 27, natural lamination was carried out in the order: nonwoven fabric A4 (thickness: 1.0 mm)/coarse felt (thickness: 8.0 mm)/ nonwoven fabric A4 (thickness: 1.0 mm), and the transmission loss was evaluated. The sound receiving chamber side was the polypropylene plate, and the results of transmission loss are shown in Table 4.

<Comparative Example 5>

For Example 27, a transmission loss test was conducted in the same manner using the nonwoven fabric A4 alone. The results of transmission loss are shown in Table 4.

<Comparative Example 6>

For Example 27, a transmission loss test was conducted in the same manner using coarse felt alone with a thickness of 8.0 mm. The results of transmission loss are shown in Table 4.

<Comparative Example 7>

For Example 27, a transmission loss test was conducted in the same manner using the polypropylene sheet alone with a thickness of 1.0 mm. The results of transmission loss are shown in Table 4.

<Comparative Example 8>

For Example 27, natural lamination was carried out using coarse felt with a thickness of 8.0 mm and a polypropylene sheet with a thickness of 1.0 mm, and the transmission loss was evaluated.
The sound receiving chamber side was the polypropylene plate, and the results of transmission loss are shown in Table 4.

<Comparative Example 9>

For Example 27, natural lamination was carried out using nonwoven fabric A4 with a thickness of 1.0 mm and a polypropylene sheet with a thickness of 1.0 mm, and the transmission loss was evaluated. The sound receiving chamber side was the polypropylene plate, and the results of transmission loss are shown in Table 4.

[Table 1]

Table 1

| Nonwoven fabric A | | | | Example 1 | Example 2 | Example 3 | Example 4 | Example 5 | Example 6 | Example 7 | Example 8 |
|---|---|---|---|---|---|---|---|---|---|---|---|
| | Name | | | A1 | A2 | A3 | A4 | A5 | A6 | A7 | A8 |
| | Surface density | $g/m^2$ | | 319 | 314 | 347 | 327 | 340 | 384 | 282 | 311 |
| | Thickness | mm | | 1.4 | 1.2 | 1.16 | 1.04 | 1.08 | 0.98 | 1.46 | 1.02 |
| | Bulk density | $kg/m^3$ | | 228 | 262 | 299 | 314 | 315 | 392 | 193 | 305 |
| | Fibrillated fibers | - | | A | B | C | C | C | C | C | C |
| | Average fiber length of fibrillated fibers | $\mu m$ | | 95 | 56 | 48 | 48 | 48 | 48 | 48 | 48 |
| | Mean fiber diameter of fibrillated fibers (Method A) | $\mu m$ | | 21 | 8 | 12 | 12 | 12 | 12 | 12 | 12 |
| | Mean fiber diameter of fibrillated fibers (Method B) | nm | | 521 | 398 | 42 | 42 | 42 | 42 | 42 | 42 |
| | Fibrillation index of fibrillated fibers | % | | 0.85 | 1.07 | 2.42 | 2.42 | 2.42 | 2.42 | 2.42 | 2.42 |
| | Fine content in area of fibrillated fibers | % | | 8.2 | 27.4 | 36.6 | 36.6 | 36.6 | 36.6 | 36.6 | 36.6 |
| | Fibrillated fiber content | wt.% | | 10 | 10 | 5 | 10 | 20 | 30 | 10 | 20 |
| | Non-fibrillated fibers | - | | PET | PET | PET | PET | PET | PET | PET | PET |
| | Fiber length of non-fibrillated fibers | mm | | 3 | 3 | 3 | 3 | 3 | 3 | 5 | 5 |
| | Fiber diameter of non-fibrillated fibers | $\mu m$ | | 3 | 3 | 3 | 3 | 3 | 3 | 7 | 7 |
| | Unit thickness flow resistance | $Ns/m^4$ | | 9.87E+06 | 9.49E+06 | 1.49E+07 | 5.20E+07 | 2.04E+08 | 1.50E+09 | 4.28E+06 | 4.10E+07 |
| | Tortuosity | - | | 2.24 | 2.32 | 1.46 | 2.32 | 4.81 | 2.03 | 6.14 | 5 |
| | Porosity | % | | 83.2 | 81.2 | 78.5 | 77.4 | 77.6 | 72.3 | 86.1 | 78.3 |

(continued)

| | | | Example 1 | Example 2 | Example 3 | Example 4 | Example 5 | Example 6 | Example 7 | Example 8 |
|---|---|---|---|---|---|---|---|---|---|---|
| Porous body B | Material type | - | Polyolefin | Polyolefin | Polyolefin | Polyolefin | Polyolefin | Polyolefin | Polyolefin | Polyolefin |
| | Surface density | $g/m^2$ | 920 | 920 | 920 | 920 | 920 | 920 | 920 | 920 |
| | Thickness | mm | 8 | 8 | 8 | 8 | 8 | 8 | 8 | 8 |
| | Bulk density | $kg/m^3$ | 115 | 115 | 115 | 115 | 115 | 115 | 115 | 115 |
| | Foam type | - | Open-cell | Open-cell | Open-cell | Open-cell | Open-cell | Open-cell | Open-cell | Open-cell |
| | Form | - | Nonwoven fabric | Nonwoven fabric | Nonwoven fabric | Nonwoven fabric | Nonwoven fabric | Nonwoven fabric | Nonwoven fabric | Nonwoven fabric |
| Sound-insulating property | 200 Hz | dB | 16 | 17 | 16 | 23 | 24 | 25 | 17 | 27 |
| | 500 Hz | dB | 10 | 10 | 10 | 16 | 18 | 20 | 17 | 23 |
| | 1000 Hz | dB | 14 | 15 | 9 | 10 | 7 | 6 | 6 | 7 |
| | 2000 Hz | dB | 19 | 18 | 18 | 23 | 22 | 20 | 13 | 15 |
| | Standard deviation | | 3.8 | 3.6 | 4.4 | 6.3 | 7.6 | 8.2 | 5.2 | 8.9 |
| | Mean | | 14.8 | 15.0 | 13.2 | 18.0 | 17.8 | 17.8 | 13.2 | 18.0 |
| | Coefficient of variation | | 25.6 | 23.7 | 33.4 | 34.8 | 42.8 | 46.1 | 39.2 | 49.3 |
| Other advantageous effects | Self-supporting property of nonwoven fabric A | - | G | G | G | G | G | G | G | G |
| | Fiber shedding of nonwoven fabric A | - | G | G | F | G | G | G | G | G |

[Table 2]

[Table 2]

Table 2

| | | | Example 9 | Example 10 | Example 11 | Example 12 | Example 13 | Example 14 | Example 15 | Example 16 |
|---|---|---|---|---|---|---|---|---|---|---|
| Nonwoven fabric A | Name | | A9 | A10 | A11 | A12 | A13 | A14 | A15 | A16 |
| | Surface density | g/m² | 304 | 312 | 278 | 311 | 343 | 345 | 327 | 342 |
| | Thickness | mm | 1.26 | 3.2 | 3.5 | 1.1 | 1.2 | 0.65 | 0.65 | 1.01 |
| | Bulk density | kg/m³ | 241 | 98 | 79 | 283 | 286 | 531 | 503 | 339 |
| | Fibrillated fibers | - | C | C | C | C | C | D | C | D |
| | Average fiber length of fibrillated fibers | μm | 48 | 48 | 48 | 48 | 48 | 21 | 48 | 21 |
| | Mean fiber diameter of fibrillated fibers (Method A) | μm | 12 | 12 | 12 | 12 | 12 | 8 | 12 | 8 |
| | Mean fiber diameter of fibrillated fibers (Method B) | nm | 42 | 42 | 42 | 42 | 42 | 32 | 42 | 32 |
| | Fibrillation index of fibrillated fibers | % | 2.42 | 2.42 | 2.42 | 2.42 | 2.42 | 1.65 | 2.42 | 1.65 |
| | Fine content in area of fibrillated fibers | % | 36.6 | 36.6 | 36.6 | 36.6 | 36.6 | 40.3 | 36.6 | 40.3 |
| | Fibrillated fiber content | wt.% | 20 | 2 | 1 | 3 | 40 | 100 | 100 | 10 |
| | Non-fibrillated fibers | - | PET | PET | PET | PET | PET | - | - | PET |
| | Fiber length of non-fibrillated fibers | mm | 5 | 5 | 5 | 3 | 5 | - | - | 3 |
| | Fiber diameter of non-fibrillated fibers | μm | 12 | 30 | 30 | 3 | 12 | - | - | 3 |
| | Unit thickness flow resistance | Ns/m⁴ | 4.16E+07 | 1.40E+06 | 1.00E+06 | 6.56E+06 | 3.16E+09 | 5.40E+09 | 4.35E+09 | 7.83E+07 |
| | Tortuosity | - | 6.58 | 1.5 | 1.18 | 1.21 | 10 | 12 | 11.2 | 3.21 |
| | Porosity | % | 82.8 | 92.9 | 94.3 | 79.6 | 80.0 | 64.6 | 66.5 | 75.7 |

EP 4 636 755 A1

(continued)

| | | | Example 9 | Example 10 | Example 11 | Example 12 | Example 13 | Example 14 | Example 15 | Example 16 |
|---|---|---|---|---|---|---|---|---|---|---|
| Porous body B | Material type | - | Polyolefin | Polyolefin | Polyolefin | Polyolefin | Polyolefin | Polyolefin | Polyolefin | Polyolefin |
| | Surface density | g/m$^2$ | 920 | 920 | 920 | 920 | 920 | 920 | 920 | 920 |
| | Thickness | mm | 8 | 8 | 8 | 8 | 8 | 8 | 8 | 8 |
| | Bulk density | kg/m$^3$ | 115 | 115 | 115 | 115 | 115 | 115 | 115 | 115 |
| | Foam type | - | Open-cell | Open-cell | Open-cell | Open-cell | Open-cell | Open-cell | Open-cell | Open-cell |
| | Form | - | Nonwoven fabric | Nonwoven fabric | Nonwoven fabric | Nonwoven fabric | Nonwoven fabric | Nonwoven fabric | Nonwoven fabric | Nonwoven fabric |
| Sound-insulating property | 200 Hz | dB | 25 | 16 | 14 | 16 | 23 | 15 | 18 | 21 |
| | 500 Hz | dB | 21 | 10 | 10 | 10 | 15 | 10 | 12 | 14 |
| | 1000 Hz | dB | 9 | 8 | 5 | 9 | 9 | 6 | 6 | 9 |
| | 2000 Hz | dB | 13 | 15 | 13 | 17 | 20 | 17 | 18 | 20 |
| | Standard deviation | | 7.3 | 3.9 | 4.0 | 4.1 | 6.1 | 5.0 | 5.7 | 5.6 |
| | Mean | | 17.0 | 12.2 | 10.5 | 13.0 | 16.8 | 12.0 | 13.5 | 16.0 |
| | Coefficient of variation | | 43.0 | 31.5 | 38.5 | 31.4 | 36.6 | 41.4 | 42.6 | 35.0 |
| Other advantageous effects | Self-supporting property of nonwoven fabric A | - | G | F | F | F | G | G | G | G |
| | Fiber shedding of nonwoven fabric A | - | G | F | F | F | G | G | G | G |

[Table 3]

[Table 3]

Table 3

| | | | Example 17 | Example 18 | Example 19 | Example 20 | Comp. Ex. 1 | Comp. Ex. 2 | Comp. Ex. 3 | Comp. Ex. 4 |
|---|---|---|---|---|---|---|---|---|---|---|
| Nonwoven fabric A | Name | | A17 | A18 | A19 | A20 | S1 | S2 | S3 | S4 |
| | Surface density | g/m$^2$ | 327 | 327 | 327 | 327 | 234 | 129.06 | 327 | 290 |
| | Thickness | mm | 1.21 | 1.04 | 1.04 | 1.04 | 1.6 | 2.7 | 1.04 | 5.4 |
| | Bulk density | kg/m$^3$ | 270 | 314 | 314 | 314 | 146 | 48 | 314 | 54 |
| | Fibrillated fibers | - | E | C | C | C | - | - | C | - |
| | Average fiber length of fibrillated fibers | μm | 123 | 48 | 48 | 48 | - | - | 48 | - |
| | Mean fiber diameter of fibrillated fibers (Method A) | μm | 20 | 12 | 12 | 12 | - | - | 12 | - |
| | Mean fiber diameter of fibrillated fibers (Method B) | nm | - | 42 | 42 | 42 | - | - | 42 | - |
| | Fibrillation index of fibrillated fibers | % | 2.1 | 2.42 | 2.42 | 2.42 | - | - | 2.42 | - |
| | Fine content in area of fibrillated fibers | % | 2.1 | 36.6 | 36.6 | 36.6 | - | - | 36.6 | - |
| | Fibrillated fiber content | wt.% | 10 | 10 | 10 | 10 | 0 | 0 | 10 | 0 |
| | Non-fibrillated fibers | - | PET | PET | PET | PET | Nylon 6 + PET | Nylon 66 | PET | PET |
| | Fiber length of non-fibrillated fibers | mm | 3 | 3 | 3 | 3 | 20 | 20 | 3 | 5 |

EP 4 636 755 A1

| | | | Example 17 | Example 18 | Example 19 | Example 20 | Comp. Ex. 1 | Comp. Ex. 2 | Comp. Ex. 3 | Comp. Ex. 4 |
|---|---|---|---|---|---|---|---|---|---|---|
| | Fiber diameter of non-fibrillated fibers | μm | 3 | 3 | 3 | 3 | 0.15 | 0.32 | 3 | 30 |
| | Unit thickness flow resistance | Ns/m$^4$ | 5.20E+07 | 5.20E+07 | 5.20E+07 | 5.20E+07 | 5.21E+06 | 2.50E+06 | 5.20E+07 | 3.76E+05 |
| | Tortuosity | - | 2.32 | 2.32 | 2.32 | 2.32 | 3.12 | 2.78 | 2.32 | 1.2 |
| | Porosity | % | 80.6 | 77.4 | 77.4 | 77.4 | 89.2 | 95.8 | 77.4 | 96.1 |
| Porous body B | Material type | - | Polyolefin | Polyester | Poly urethane | Polyamide 666 | Polyolefin | Polyolefin | - | Polyolefin |
| | Surface density | g/m$^2$ | 920 | 215 | 218 | 650 | 920 | 920 | - | 920 |
| | Thickness | mm | 8 | 11 | 10 | 6 | 8 | 8 | - | 8 |
| | Bulk density | kg/m$^3$ | 115 | 19.5 | 21.8 | 108 | 115 | 115 | - | 115 |
| | Foam type | - | Open-cell | Open-cell | Closed-cell | Open-cell | Open-cell | Open-cell | - | Open-cell |
| | Form | - | Nonwoven fabric | Nonwoven fabric | Foamed body | Foamed body | Nonwoven fabric | Nonwoven fabric | - | Nonwoven fabric |
| Sound-insulating property | 200 Hz | dB | 23 | 21 | 19 | 27 | 9 | 8 | 23 | 7 |
| | 500 Hz | dB | 16 | 15 | 11 | 20 | 7 | 6 | 8 | 5 |
| | 1000 Hz | dB | 10 | 9 | 6 | 15 | 4 | 3 | 4 | 7 |
| | 2000 Hz | dB | 23 | 20 | 15 | 18 | 8 | 7 | 23 | 10 |
| | Standard deviation | | 6.3 | 5.5 | 5.6 | 5.1 | 2.2 | 2.2 | 9.9 | 2.1 |
| | Mean | | 18.0 | 16.3 | 12.8 | 20.0 | 7.0 | 6.0 | 14.5 | 7.3 |
| | Coefficient of variation | | 34.8 | 33.8 | 43.6 | 25.5 | 30.9 | 36.0 | 68.6 | 28.4 |
| Other advantageous effects | Self-supporting property of nonwoven fabric A | - | F | G | G | G | P | P | G | P |

| | | | Example 17 | Example 18 | Example 19 | Example 20 | Comp. Ex. 1 | Comp. Ex. 2 | Comp. Ex. 3 | Comp. Ex. 4 |
|---|---|---|---|---|---|---|---|---|---|---|
| | Fiber shedding of nonwoven fabric A | - | F | G | G | G | P | P | G | P |

[Table 4]

[Table 4]

Table 4

| Center frequency [Hz] | Example 27 Polypropylene sheet 1 mm + felt 8 mm + CNF 1 mm | Example 28 Polypropylene sheet 1 mm + felt 16 mm + CNF 1 mm | Example 29 CNF 1 mm + felt 8 mm + CNF 1 mm | Comp. Example 5 CNF1.0 mm | Comp. Example 6 Felt 20 mm | Comp. Example 7 Plastic sheet 1 mm | Comp. Example 8 Polypropylene sheet 1 mm + felt 8 mm | Comp. Example 9 Polypropylene sheet 1 mm + CNF 1 mm | Comp. Example 10 Felt 8 mm + polypropylene sheet 1 mm + CNF 1 mm |
|---|---|---|---|---|---|---|---|---|---|
| 400 | 9.6 | 9.2 | 8.1 | 2.9 | 3.0 | 8.3 | 9.5 | 9.5 | 9.6 |
| 500 | 10.5 | 9.3 | 8.2 | 3.9 | 3.5 | 9.8 | 10.4 | 11.2 | 11.8 |
| 630 | 10.4 | 9.3 | 8.2 | 4.2 | 3.3 | 10.9 | 11.6 | 12.3 | 12.9 |
| 800 | 10.5 | 12.5 | 10.2 | 5.8 | 4.0 | 12.8 | 13.2 | 13.7 | 14.2 |
| 1000 | 11.6 | 17.4 | 14.3 | 6.6 | 4.2 | 14.0 | 14.5 | 14.9 | 15.4 |
| 1250 | 16.6 | 23.4 | 18.3 | 7.7 | 4.8 | 16.2 | 16.7 | 16.0 | 16.5 |
| 1600 | 22.3 | 28.8 | 21.5 | 9.4 | 6.1 | 18.4 | 19.2 | 17.2 | 17.7 |
| 2000 | 26.8 | 34.4 | 24.6 | 9.7 | 6.6 | 19.2 | 21.0 | 17.6 | 22.6 |
| 2500 | 32.6 | 39.7 | 28.2 | 10.9 | 7.6 | 21.1 | 24.1 | 19.3 | 25.3 |
| 3150 | 38.3 | 43.7 | 31.4 | 11.9 | 7.9 | 23.1 | 27.1 | 21.6 | 28.6 |
| 4000 | 43.5 | 48.3 | 34.5 | 13.7 | 8.6 | 25.7 | 31.0 | 25.4 | 32.6 |
| 5000 | 48.7 | 54.1 | 37.6 | 16.2 | 10.3 | 28.8 | 35.4 | 30.8 | 36.3 |
| 6300 | 53.1 | 58.8 | 41.4 | 18.6 | 11.5 | 32.0 | 38.4 | 35.7 | 39.5 |
| 8000 | 59.0 | 65.3 | 44.8 | 21.6 | 13.8 | 34.8 | 43.5 | 41.7 | 44.3 |
| 10,000 | 64.0 | 71.1 | 47.8 | 24.6 | 15.8 | 37.9 | 47.6 | 46.9 | 48.6 |

EP 4 636 755 A1

34

INDUSTRIAL APPLICABILITY

The soundproof material of the invention exhibits sound absorption performance while having an excellent sound-insulating property throughout a frequency range from 200 Hz to 2000 Hz, and it can therefore be suitably used as a sound-absorbing material to suppress various types of noise, such as engine or drive system noise, road noise or wind noise in automobiles, and to thereby create a more comfortable indoor automobile space.

**Claims**

1. A soundproof material comprising at least two laminated layers: a nonwoven fabric A as a nonwoven fabric composed of fibers and a porous body B as a molded article with a porous structure, wherein the nonwoven fabric A contains fibrillated fibers at 1 wt.% or greater.

2. The soundproof material according to claim 1, comprising at least three layers: the nonwoven fabric A as a nonwoven fabric composed of fibers, the porous body B as a molded article with a porous structure, and a sound-insulating material, which are layered in the order: nonwoven fabric A, porous body B, sound-insulating material.

3. The soundproof material according to claim 2, wherein the sound-insulating material is the nonwoven fabric A.

4. The soundproof material according to claim 1 or 2, wherein the nonwoven fabric A has a unit thickness flow resistance of from 1,400,000 Ns/m$^4$ to 5,000,000,000 Ns/m$^4$.

5. The soundproof material according to claim 1 or 2, wherein the nonwoven fabric A has a porosity of from 60% to 96%.

6. The soundproof material according to claim 1 or 2, wherein the nonwoven fabric A has a tortuosity of from 1.20 to 10.0.

7. The soundproof material according to claim 1 or 2, wherein the nonwoven fabric A further comprises fibers that are not fibrillated.

8. The soundproof material according to claim 1 or 2, wherein the porous body B has a surface density of 10,000 g/m$^2$ or lower and a thickness of from 1 mm to 100 mm.

9. The soundproof material according to claim 1 or 2, wherein the fibrillated fibers are one or more selected from the group consisting of microfibrillated cellulose, acrylic pulp, aramid pulp, chitin nanofibers, chitosan nanofibers and silk nanofibers.

10. The soundproof material according to claim 1 or 2, wherein the fibrillated fibers have a fibrillation index of 0.3% or greater.

11. The soundproof material according to claim 1 or 2, wherein the fibrillated fibers comprise 3 wt.% to 30 wt.% based on the total weight of the nonwoven fabric.

## INTERNATIONAL SEARCH REPORT

| International application No. |
| --- |
| **PCT/JP2023/044403** |

| | |
| --- | --- |
| **A. CLASSIFICATION OF SUBJECT MATTER** | |

*G10K 11/168*(2006.01)i; *B32B 5/24*(2006.01)i; *B32B 5/26*(2006.01)i; *G10K 11/16*(2006.01)i
FI: G10K11/168; G10K11/16 120; B32B5/26; B32B5/24

According to International Patent Classification (IPC) or to both national classification and IPC

**B. FIELDS SEARCHED**

Minimum documentation searched (classification system followed by classification symbols)

G10K11/168; B32B5/24; B32B5/26; G10K11/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2022-65937 A (ASAHI KASEI KABUSHIKI KAISHA) 28 April 2022 (2022-04-28) paragraphs [0009]-[0033] | 1, 7, 9, 11 |
| Y | | 4-6, 10 |
| X | WO 2017/006993 A1 (NAGOYA OIL CHEM. CO., LTD.) 12 January 2017 (2017-01-12) paragraphs [0008]-[0032] | 1-3, 7-9, 11 |
| Y | | 4-6, 10 |
| Y | WO 2016/051527 A1 (COMPAGNIE GENERALE DES ETABLISSEMENTS MICHELIN) 07 April 2016 (2016-04-07) paragraphs [0031], [0033] | 4-6 |
| Y | JP 2020-165058 A (NIPPON PAPER INDUSTRIES CO., LTD.) 08 October 2020 (2020-10-08) paragraph [0133] | 10 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 January 2024** | **13 February 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

**INTERNATIONAL SEARCH REPORT**
Information on patent family members

International application No.

**PCT/JP2023/044403**

| Patent document cited in search report | | | Publication date (day/month/year) | Patent family member(s) | | | Publication date (day/month/year) |
|---|---|---|---|---|---|---|---|
| JP | 2022-65937 | A | 28 April 2022 | (Family: none) | | | |
| WO | 2017/006993 | A1 | 12 January 2017 | CN | 107408379 | A | |
| WO | 2016/051527 | A1 | 07 April 2016 | US | 2017/0309266 | A1 | |
| | | | | paragraphs [0094], [0096] | | | |
| | | | | EP | 3203467 | A1 | |
| | | | | CN | 106716521 | A | |
| JP | 2020-165058 | A | 08 October 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018154113 A

- WO 2017006993 A